(19) Europäisches Patentamt
European Patent Office
Office européen des brevets

(11) EP 4 495 182 A1

(12) EUROPEAN PATENT APPLICATION
published in accordance with Art. 153(4) EPC

(43) Date of publication:
22.01.2025 Bulletin 2025/04

(21) Application number: 23770743.5

(22) Date of filing: 13.03.2023

(51) International Patent Classification (IPC):
C08L 53/02 (2006.01) C08F 4/6592 (2006.01)
C08F 8/00 (2006.01) C08L 23/26 (2025.01)
C08L 101/00 (2006.01) C09D 123/16 (2006.01)
C09D 123/26 (2006.01) C09D 153/00 (2006.01)
C09J 123/16 (2006.01) C09J 153/00 (2006.01)
C09K 3/10 (2006.01)

(52) Cooperative Patent Classification (CPC):
C08F 4/6592; C08F 8/00; C08L 23/26; C08L 53/02; C08L 101/00; C09D 123/16; C09D 123/26; C09D 153/00; C09J 123/16; C09J 153/00; C09K 3/10

(86) International application number:
PCT/JP2023/009685

(87) International publication number:
WO 2023/176788 (21.09.2023 Gazette 2023/38)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 17.03.2022 JP 2022043066

(71) Applicant: Mitsui Chemicals, Inc.
Tokyo 104-0028 (JP)

(72) Inventors:
- YOSHIDA Yuto
  Sodegaura-shi, Chiba 299-0265 (JP)
- SHIMAMURA Takehiko
  Kuga-gun, Yamaguchi 740-0061 (JP)

(74) Representative: Hoffmann Eitle
Patent- und Rechtsanwälte PartmbB
Arabellastraße 30
81925 München (DE)

# (54) THERMOPLASTIC RESIN COMPOSITION

(57) Provided is a thermoplastic resin composition excellent in flexibility and mechanical strength with a good balance.

The thermoplastic resin composition includes 100 parts by mass of a thermoplastic resin which is hydrogenated product of a block copolymer including a polymer block (X) having a vinyl aromatic compound as a main component and a polymer block (Y) having a conjugated diene compound as a main component, and 1 to 400 parts by mass of a modified ethylene/α-olefin copolymer satisfying the following requirements (b-1) to (b-3).

Requirement (b-1): the content of a structural unit derived from ethylene is 15 to 85 mol%.
Requirement (b-2): the weight-average molecular weight is in the range of 1,000 to 100,000.
Requirement (b-3): the modified ethylene/α-olefin copolymer (B) is a modified copolymer having a substituent derived from one or more vinyl aromatic compounds, and the content of a moiety derived from the one or more vinyl aromatic compounds in the modified copolymer is in the range of 1 to 70% by mass.



Processed by Luminess, 75001 PARIS (FR)

## Description

### Technical Field

The present invention relates to a thermoplastic resin composition.

### Background Art

A thermoplastic elastomer (TPE) is used for various applications such as automobiles, home electrical appliances, food, medical care and daily commodities, as a material having both melt molding processability similar to that of a thermoplastic resin such as polyethylene (PE) or polypropylene (PP) and softness/rubber elasticity close to that of crosslinked rubber. There are various kinds of TPEs such as olefin-based elastomers (TPOs), styrene-based elastomers (TPSs), polyurethane-based elastomers (TPUs), polyamide-based elastomers (TPAs or TPAEs), polyester-based elastomers (TPCs or TPYs) and vinyl chloride-based elastomers (TPVCs) .

Among them, TPS is a compound having a styrene-based block copolymer (SBC) as a base resin. SBC is a generic name of block copolymers in which a hard segment as a constrained phase is composed of polystyrene. The soft segment is a polymer of conjugated diene such as butadiene or isoprene, or a hydrogen-added (hydrogenated) product thereof. In SBC, the soft segment and the hard segment have a microphase-separated structure at normal temperature, and thus the hard segment provides a physical crosslinking point, so that performance as an elastomer (softness and rubber elasticity) is exhibited without chemical crosslinking. Also, the physical crosslinking point composed of a polystyrene block can be melted and de-crosslinked at a temperature equal to or higher than a glass transition point thereof, and therefore unlike common crosslinked rubber, SBC has thermoplasticity, and can be melt-molded. Among SBCs, SBC in which a soft segment such as a polybutadiene block or a polyisoprene block is hydrogenated (HSBC) has no double bond in the molecule, thus exhibits better heat resistance and weather resistance over non-hydrogenated SBC, and therefore is widely used as a TPS raw material.

SBC, in particular, HSBC can hold a large amount of oil in its soft segment, and thus has a characteristic that it can form a very flexible compound by incorporating oil at a high proportion. Taking advantage of this characteristic, SBC is used for, for example, adhesives (for example, Patent Literature 1). The high flexibility improves adhesiveness to an adherend, and enables stress to be dispersed throughout an adhesive layer, so that it is possible to increase peel strength.

The oil blended in HSBC is typically a mineral oil produced by purifying crude oil (process oil), in particular, a paraffin-based mineral oil. A hydrocarbon-based synthetic oil may be used.

### Citation List

### Patent Literature

Patent Literature 1: JP 2020-117661A

### Summary of Invention

### Technical Problem

On the other hand, if a large amount of oil is blended in SBC for enhancing flexibility, mechanical strength such as tensile strength decreases, breakage of an adhesive layer itself and cohesive failure are likely to occur, and a decrease in peel strength may result. That is, in an adhesive, a balance between flexibility and mechanical strength is important, and there may be a need for improvement of the balance. Oil-blended HSBC has a room for improvement in balance between flexibility and mechanical strength.

An object of the present invention is to provide a thermoplastic resin composition excellent in flexibility and mechanical strength with a good balance, and a shaped article including the composition.

### Solution to Problem

The present inventors have conducted intensive studies for solving the above-described problem, and resultantly found that a thermoplastic resin composition excellent in flexibility and mechanical strength with a good balance can be obtained by using a specific modified-ethylene/$\alpha$-olefin copolymer (B).

The present invention relates to, for example, the following [1] to [17].

[1] A thermoplastic resin composition comprising:

100 parts by mass of a thermoplastic resin; and
1 to 400 parts by mass of a modified ethylene/α-olefin copolymer (B) satisfying the following requirements (b-1) to (b-3) :

requirement (b-1): the content of a structural unit derived from ethylene is in the range of 15 to 85 mol%, provided that the sum of the content of a structural unit derived from ethylene and the content of a structural unit derived from an α-olefin is 100 mol%,
requirement (b-2) the weight-average molecular weight (Mw) determined by gel permeation chromatography (GPC) is in the range of 1,000 to 100,000, and
requirement (b-3): the modified ethylene/α-olefin copolymer (B) is a modified copolymer having a substituent derived from a compound having a carbon-carbon unsaturated bond, and the content of a moiety derived from the compound having a carbon-carbon unsaturated bond in the modified copolymer is in the range of 1 to 70% by mass.

[2] The thermoplastic resin composition according to [1], wherein the thermoplastic resin (A) is a polymer containing one or more vinyl aromatic compounds as a monomer structural unit, and the compound having a carbon-carbon unsaturated bond is one or more vinyl aromatic compounds and the content of a moiety derived from the vinyl aromatic compounds in the modified copolymer is in the range of 1 to 40% by mass in the requirement (b-3).
[3] The thermoplastic resin composition according to [1] or [2], wherein the thermoplastic resin (A) is a block copolymer comprising a polymer block (X) having a vinyl aromatic compound as a main component and a polymer block (Y) having a conjugated diene compound as a main component, or a hydrogenated product thereof.
[4] The thermoplastic resin composition according to [3], wherein the thermoplastic resin (A) is the hydrogenated product of a block copolymer comprising a polymer block (X) having a vinyl aromatic compound as a main component and a polymer block (Y) having a conjugated diene compound as a main component.
[5] The thermoplastic resin composition according to any one of [1] to [4], wherein the content of a structural unit derived from ethylene is in the range of 40 to 60 mol% in the requirement (b-1), the weight-average molecular weight (Mw) determined by gel permeation chromatography (GPC) is in the range of 2,000 to 80,000 in the requirement (b-2), and the compound having a carbon-carbon unsaturated bond is one or more vinyl aromatic compounds and the content of a moiety derived from the vinyl aromatic compounds in the modified copolymer is in the range of 3 to 40% by mass in the requirement (b-3).
[5a] The thermoplastic resin composition according to any one of [1] to [5], wherein the modified ethylene/α-olefin copolymer (B) further satisfies the following requirement (b-5) :
requirement (b-5): the Brookfield viscosity at 100°C, as measured according to JIS K7117-1, is in the range of 10 to 5,000,000 mPa·s.
[6] A coating material comprising the thermoplastic resin composition according to any one of [1] to [5a].
[7] An adhesive comprising the thermoplastic resin composition according to any one of [1] to [5a].
[8] A seal material comprising the thermoplastic resin composition according to any one of [1] to [5a].
[9] A damping material comprising the thermoplastic resin composition according to any one of [1] to [5a].
[10] An automobile interior material comprising the thermoplastic resin composition according to any one of [1] to [5a].
[11] A method for producing a thermoplastic composition, comprising a step of mixing

100 parts by mass of a thermoplastic resin (A), and
1 to 400 parts by mass of a modified ethylene/α-olefin copolymer (B) satisfying the following requirements (b-1) to (b-3):

requirement (b-1): the ethylene structural unit content is 15 to 85 mol%,
requirement (b-2): the weight-average molecular weight (Mw) determined by gel permeation chromatography (GPC) is 1,000 to 100,000, and
requirement (b-3): the modified ethylene/α-olefin copolymer (B) is a modified copolymer having a substituent derived from a compound having a carbon-carbon unsaturated bond, and the content of a moiety derived from the compound having a carbon-carbon unsaturated bond in the modified copolymer is in the range of 1 to 70% by mass.

[11a] The method for producing a thermoplastic resin composition according to [11], wherein the thermoplastic resin (A) is a hydrogenated product of a block copolymer comprising a polymer block (X) having a vinyl aromatic compound as a main component and a polymer block (Y) having a conjugated diene compound as a main component.
[11b] The method for producing a thermoplastic resin composition according to [11] or [11a], wherein the compound having a carbon-carbon unsaturated bond is one or more vinyl aromatic compounds in the requirement (b-3).

[12] The production method according to any one of [11] to [11b], wherein the modified ethylene/$\alpha$-olefin copolymer (B) is a modified product of an ethylene/$\alpha$-olefin copolymer (B") produced by the following method ($\alpha$):
Method ($\alpha$): a method comprising a step of solution polymerizing ethylene and an $\alpha$-olefin in the presence of a catalyst system comprising:

a bridged metallocene compound (P-1) represented by the following formula (formula 1), and
at least one compound (Q) selected from the group consisting of an organometal compound (Q-1), an organoaluminum oxy compound (Q-2), and a compound (Q-3) that reacts with the bridged metallocene compound (P-1) to form an ion pair,

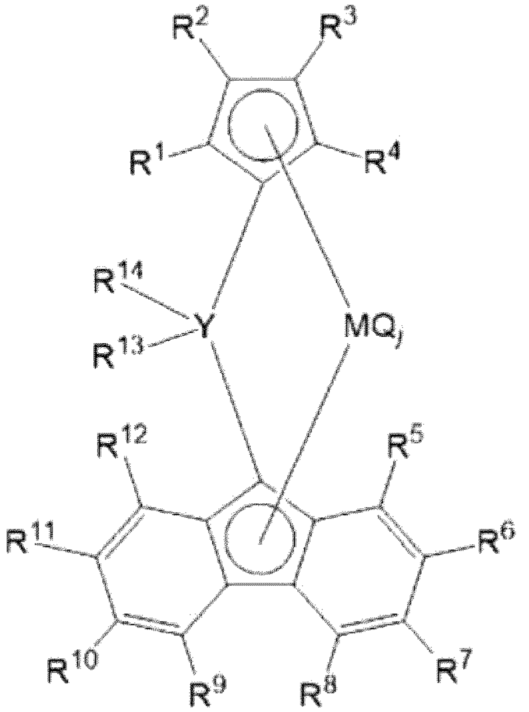
• • • (formula 1)

wherein $R^1$, $R^2$, $R^3$, $R^4$, $R^5$, $R^8$, $R^9$ and $R^{12}$ are each independently a hydrogen atom, a hydrocarbon group, or a silicon-containing hydrocarbon group, and a plurality of adjacent groups are optionally linked to each other to form a ring structure;

$R^6$ and $R^{11}$ are the same group and are a hydrogen atom, a hydrocarbon group, or a silicon-containing hydrocarbon group;
$R^7$ and $R^{10}$ are the same group and are a hydrogen atom, a hydrocarbon group, or a silicon-containing hydrocarbon group;
$R^6$ and $R^7$ are optionally bonded to a hydrocarbon having 2 to 3 carbon atoms to form a ring structure;
$R^{10}$ and $R^{11}$ are optionally bonded to a hydrocarbon having 2 to 3 carbon atoms to form a ring structure;
$R^6$, $R^7$, $R^{10}$, and $R^{11}$ are not hydrogen atoms at the same time;
Y is a carbon atom or a silicon atom;
$R^{13}$ and $R^{14}$ are each independently a hydrogen atom, a hydrocarbon group, or a silicon-containing hydrocarbon group, and are optionally linked to each other to form a ring structure;
M is Ti, Zr, or Hf;
Q is independently a halogen atom, a hydrocarbon group, an anionic ligand, or a neutral ligand capable of coordinating to a lone pair of electrons; and
j is an integer of 1 to 4.

[13] The production method according to [12], wherein in the formula 1, one or both of $R^{13}$ and $R^{14}$ are aryl groups.
[14] The production method according to [12] or [13], wherein in the formula 1, both $R^{13}$ and $R^{14}$ are aryl groups, and one of $R^2$ and $R^3$ is a saturated hydrocarbon group having 4 carbon atoms.
[15] The production method according to any one of [11] to [14], wherein the content of a structural unit derived from ethylene is in the range of 40 to 60 mol% in the requirement (b-1), the weight-average molecular weight (Mw)

determined by gel permeation chromatography (GPC) is in the range of 2,000 to 80,000 in the requirement (b-2), and the compound having a carbon-carbon unsaturated bond is one or more vinyl aromatic compounds and the content of a moiety derived from the vinyl aromatic compounds in the modified copolymer is in the range of 3 to 40% by mass in the requirement (b-3).

[16] The production method according to any one of [11] to [14], wherein the content of a structural unit derived from ethylene is in the range of 40 to 60 mol% in the requirement (b-1), the weight-average molecular weight (Mw) determined by gel permeation chromatography (GPC) is in the range of 2,000 to 80,000 in the requirement (b-2), and the compound having a carbon-carbon unsaturated bond is one or more unsaturated carboxylic acid compounds selected from unsaturated carboxylic acids and unsaturated carboxylic acid derivatives and the content of the unsaturated carboxylic acid compound in the modified copolymer is in the range of 1 to 20% by mass in the requirement (b-3).

[17] The production method according to any one of [11] to [16], wherein the modified ethylene/α-olefin copolymer (B) further satisfies the following requirement (b-5): requirement (b-5): the Brookfield viscosity at 100°C, as measured according to JIS K7117-1, is in the range of 10 to 5,000,000 mPa·s.

Advantageous Effect of Invention

According to the present invention, it is possible to provide a thermoplastic resin composition excellent in flexibility and mechanical strength with a good balance, and a shaped article including the composition.

Description of Embodiments

The present invention will be described in detail below. In the present specification, the term "to" which indicates a numerical range, in, for example, "M to N", means being "equal to or greater than M and equal to or less than N" unless otherwise specified.

In the present specification, the term "constituent unit derived from M" may be used when an olefin forming a certain polymer is M, and this means a "constituent unit corresponding to M", that is, a constituent unit having a pair of bonds formed by cleavage of a π bond forming a double bond of M.

In the present specification, the term "(meth)acryl" is used as a concept which encompasses acryl, methacryl, and both acryl and methacryl.

In the present specification, the terms "aromatic" and "aromatic ring" are used as a concept which encompasses not only benzene rings, but also condensed polycyclic aromatics such as naphthalene, anthracene and triphenylene, heteroaromatics such as furan, thiophene, pyrrole, imidazole, oxazole, thiazole and pyridine, ionic aromatics such as cyclopentadienyl anions, various compounds having aromaticity, such as azulene and porphyrin, rings having aromaticity.

[Thermoplastic resin composition]

The thermoplastic resin composition of the present invention includes a thermoplastic resin (A) shown below, and a modified ethylene/α-olefin copolymer (B) shown below.

[Thermoplastic resin (A)]

Examples of the thermoplastic resin (A) include polyolefin resins, polyvinyl chloride resins, polyamide resins, polyester resins, styrene-based resins, polyurethane resins, polyacetal resins, acrylic resins, polycarbonate resins, polyphenylene ether resins, polyphenylene sulfide resins, fluorine-based resins, polyimide resins, and polyetherketone resins.

Examples of the polyolefin resin include low-density polyethylene, medium-density polyethylene, high-density polyethylene, linear low-density polyethylene, polypropylene, polybutene, poly(4-methyl-1-petene), cyclic olefin polymers, ethylene/propylene copolymers, ethylene/butene copolymers, ethylene/octene copolymers, propylene/ethylene copolymers, propylene/butene copolymers, propylene/ethylene/butene copolymers, propylene/4-methyl-1-pentene copolymers, and ethylene/cyclic olefin copolymers.

Examples of the polyvinyl chloride resin include vinyl chloride homopolymers, copolymers of vinyl chloride and, for example, vinylidene chloride, an acrylic acid ester, acrylonitrile, propylene or ethylene.

Examples of the polyamide resin include nylon 6, nylon 11, nylon 12, nylon 46, nylon 66, nylon M XD6, wholly aromatic polyamides, and semi-aromatic polyamides.

Examples of the polyester resin include polyethylene terephthalate, and polybutylene terephthalate.

Examples of the styrene-based resin include styrene-based polymers such as polystyrene, acrylonitrile/styrene copolymers, acrylonitrile/butadiene/styrene copolymers, styrene/butadiene copolymers and styrene/isoprene copolymers, and hydrogenated products thereof. The styrene-based polymers and hydrogenated products thereof may be random copolymers or block copolymers.

Examples of the polyurethane resin include those synthesized from an isocyanate such as m-xylylene diisocyanate (XDI), 4,4'-methylenebis(cyclohexyl isocyanate) (HMDI) or isophorone diisocyanate (IPDI) and a polyester-based or polyether-based diol.

Examples of the polyacetal resin include polyacetal homopolymers, and copolymers of formaldehyde and trioxane.

Examples of the acrylic resin include those having a structural unit derived from an unsaturated monomer such as acrylic acid, methyl acrylate, ethyl acrylate, butyl acrylate, sodium acrylate, ammonium acrylate, 2-hydroxyethyl acrylate, methacrylic acid, methyl methacrylate, ethyl methacrylate, butyl methacrylate, sodium methacrylate, ammonium methacrylate, 2-hydroxyethyl methacrylate, glycidyl methacrylate, acrylamide or methacrylamide. The acrylic resin may be a copolymer of the unsaturated monomer exemplified above and another unsaturated monomer such as styrene, vinyl acetate, vinyl chloride, vinylidene chloride or divinyl benzene.

Examples of the polycarbonate include bisphenol A type aromatic polycarbonate.

Examples of the polyphenylene ether resin include polyphenylene ether, and modified polyphenylene ether.

Examples of the fluorine-based resin include polytetrafluoroethylene (PTFE), tetrafluoroethylene-perfluoroalylvinylether copolymers (PFA), and tetrafluoroethylene-ethylene copolymers (ETFE).

Examples of the polyimide resin include those obtained from a combination of pyromellitic anhydride and diaminodiphenyl ether or bismaleimide and diaminodiphenyl methane.

Examples of the polyetherketone resin include polyetherketone, polyetheretherketone, polyetherketoneketone, and polyetheretherketoneketone.

Among them, styrene-based resins are preferable, and block copolymers including a polymer block (X) having a vinyl aromatic compound as a main component and a polymer block (Y) having a conjugated diene compound as a main component, or hydrogenated products thereof (A) are more preferable.

The block copolymer includes a polymer block (X) having vinyl aromatic compound as a main component and a polymer block (Y) having a conjugated diene compound as a main component, and is also referred to as an "X/Y block copolymer" hereinafter.

Specific examples of the aromatic vinyl compound forming the polymer block (X) include styrene, $\alpha$-methylstyrene, 2-methylstyrene, 3-methylstyrene, 4-methylstyrene, 1,3-dimethylstyrene, 4-tert-butylstyrene, 1-vinylnaphthalene, 2-vinylnaphthalene, 4-propylstyrene, 4-iso-propylstyrene, 4-cyclohexylstyrene, 4-dodecylstyrene, 2-ethyl-4-benzylstyrene, 4-(phenylbutyl)styrene, monochlorostyrene, dichlorostyrene, methoxystyrene, and vinyl anthracene, and one or more of these aromatic vinyl compounds can be used. Among them, styrene is most preferable.

The conjugated diene compound forming the polymer block (Y) is preferably a conjugated diene having 4 to 20 carbon atoms, specific examples thereof include 1,3-butadiene, isoprene(2-methyl-1,3-butadiene), 2,3-dimethyl-1,3-butadiene, 1,3-pentadiene, and 1,3-hexadiene, and one or more of these conjugated diene compounds can be used. Among them, butadiene and isoprene are most preferable.

The weight-average molecular weight (Mw) of the X/Y block copolymer in terms of polystyrene, as measured by GPC, is preferably 20,000 to 500,000, more preferably 30,000 to 400,000, and still more preferably 40,000 to 300,000. When the weight-average molecular weight of the X/Y block copolymer is 20,000 or more, the mechanical strength of the thermoplastic resin composition is improved, and when the weight-average molecular weight is 500,000 or less, the composition has good flexibility and molding processability.

The ratio between the polymer block (X) and the polymer block (Y) in the X/Y block copolymer depends on, for example, the number average molecular weight of the X/Y block copolymer and the number average molecular weights of the polymer block (X) and the polymer block (Y). In general, the ratio of the polymer block (X) is preferably 5 to 80 mass% with the ratio of the polymer block (Y) being 20 to 95 mass%, more preferably 10 to 65 mass% with the ratio of the polymer block (Y) being 35 to 90 mass%, still more preferably 20 to 40 mass% with the ratio of the polymer block (Y) being 60 to 80 mass%, based on the mass of the X/Y block copolymer. When the ratio of the polymer block (X) is 5 mass% or more (that is, the ratio of the polymer block (Y) is 95 mass% or less) in the X/Y block copolymer, the thermoplastic resin composition including an X/Y block copolymer has good material strength, and when the ratio of the polymer block (X) is 80 mass% or less (that is, the ratio of the polymer block (Y) is 20 mass% or more), the thermoplastic resin composition including an X/Y block copolymer has good flexibility.

The X/Y block copolymer may be linear, or branched into two or more branches, and there is no particular limitation on the structure thereof. A tri-block structure of X-Y-X type is particularly preferable in view of balance of mechanical properties, heat resistance and processability.

Specific examples of the X/Y block copolymer include styrene-butadiene-styrene block copolymers, styrene-isoprene-styrene block copolymers, and styrene-butadiene/isoprene-styrene block copolymers. For example, the styrene-butadiene-styrene block copolymer means a block copolymer in the form of polystyrene block-polybutadiene block-polystyrene block.

The method for producing the X/Y block copolymer is not particularly limited, and the X/Y block copolymer can be produced by, for example, sequentially polymerizing a vinyl aromatic compound such as styrene and a conjugated diene compound such as isoprene or butadiene in an inert solvent using a known method such as ion polymerization such as anion polymerization or cation polymerization, radical polymerization or coordination polymerization.

The thermoplastic resin (A) may be a hydrogenated product of the X/Y block copolymer. It is preferable to use the hydrogenated product because hydrogenation reduces the number of aliphatic double bonds in the X/Y block copolymer to improve heat resistance and weather resistance, and compatibility with the modified ethylene/α-olefin copolymer (B) that is a softener.

As the hydrogenated product of the X/Y block copolymer, a hydrogenated product in which 90% to 100% of aliphatic double bonds of the X/Y block copolymer are hydrogenated and 10% or less of aromatic double bonds are hydrogenated is suitable, and in particular, a hydrogenated product in which 99 to 100% of aliphatic double bonds are hydrogenated and 5% or less of aromatic double bonds are hydrogenated is preferable. In such a hydrogenated product of the X/Y block copolymer, the polymer block (Y) in which aliphatic double bonds are hydrogenated is substantially a block of polyolefin structure.

Examples of the hydrogenated product of the X/Y block copolymer include styrene-(ethylene/butene)-styrene copolymers, styrene-(ethylene/propylene)-styrene copolymers, and styrene-(ethylene/ethylene/propylene)-styrene copolymers.

In particular, the hydrogenated product of the X/Y block copolymer is preferably a hydrogenated product of a block copolymer including a polymer block having styrene as a main component and a copolymer block having butadiene and isoprene as main components.

For hydrogenation of the X/Y block copolymer, a known method can be employed, and the hydrogenated product can be obtained by, for example, reacting the X/Y block copolymer under appropriate temperature and pressure conditions in the presence of a hydrogenation catalysts and hydrogen.

As the X/Y block copolymer used as the thermoplastic resin (A), two or more X/Y block copolymers different in properties such as a molecular weight and a styrene content may be used in combination.

The X/Y block copolymer used as the thermoplastic resin (A) is commercially available, and a commercially available product can be used. Examples of the non-hydrogenated product include "D Series" from Kraton Corporation, "TR Series" manufactured by JSR Corporation, and "Tufprene (registered trademark)" and "Asaprene (registered trademark)" manufactured by Asahi Kasei Corp. Examples of the hydrogenated product include "SEPTON (registered trademark)" and "HYBRAR (registered trademark)" manufactured by Kuraray Co., Ltd, "Tuftec (registered trademark)" manufactured by Asahi Kasei Corp., "DYNARON (registered trademark)" manufactured by JSR Corporation, and "G Series" manufactured by Kraton Polymers.

As a monomer that is a raw material for the X/Y block copolymer used as the thermoplastic resin (A), for example, a monomer derived from a fossil fuel, a monomer derived from a biomass, or a monomer derived from a fossil fuel and a monomer derived from a biomass may be used. These monomers may be used alone, or used in combination of two or more thereof.

<u>[Modified ethylene/α-olefin copolymer (B)]</u>

The modified ethylene/α-olefin copolymer (B) [hereinafter, sometimes abbreviated as a "modified copolymer (B)"] satisfies the following requirements (b-1) to (b-3).

<Requirement (b-1)>

The requirement (b-1) is that the content, in the modified ethylene/α-olefin copolymer (B), of a structural unit derived from ethylene, that is, a structural unit derived from ethylene in an unmodified ethylene/α-olefin copolymer (B') [sometimes abbreviated as an "ethylene content"] is 15 to 85 mol% [provided that the sum of the content of a structural unit derived from ethylene and the content of a structural unit derived from an α-olefin is 100 mol%].

The ethylene content is 15 to 85 mol%, preferably 20 to 80 mol%, more preferably 30 to 70 mol%, and still more preferably 40 to 60 mol%. An excessively large or small ethylene content may deteriorate compatibility of, for example, the X/Y block copolymer with the thermoplastic resin (A), resulting in deterioration of mechanical strength or occurrence of bleed out, or may increase crystallinity and thus reduce the softening effect, resulting in deterioration of the flexibility of the thermoplastic resin composition.

The ethylene content in the modified ethylene/α-olefin copolymer (B) can be measured by a $^{13}C$-NMR method, and each peak can be identified and quantitated by, for example, a method described below and a method described in "Polymer Analysis Handbook" (published from Asakura Publishing Co., Ltd., pp. 163-170).

Examples of the α-olefin forming the modified ethylene/α-olefin copolymer (B) include α-olefins other than ethylene which have 3 or more carbon atoms, and typical examples thereof include α-olefins having 3 to 20 carbon atoms,

such as propylene, 1-butene, 1-pentene, 1-hexene, 1-heptene, 1-octene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene. These α-olefins may be used alone, or used in combination of two or more thereof.

Among these α-olefins, α-olefins having 3 to 10 carbon atoms are preferable, propylene and 1-butene are more preferable, and propylene is still more preferable, from the viewpoint that crystallinity can be effectively reduced to obtain a liquid copolymer, and it is possible to obtain a composition and a shaped article that exhibit the desired effects.

It is also possible to proceed with the polymerization with the reaction system also including at least one other monomer selected from a polar group-containing monomer, a vinyl aromatic compound and a cyclic olefin. The other monomer can be used in an amount of, for example, 20 parts by mass or less, preferably 10 parts by mass or less per 100 parts by mass in total of ethylene and an α-olefin having 3 to 20 carbon atoms.

Examples of the polar group-containing monomer include α,β-unsaturated carboxylic acids such as acrylic acid, methacrylic acid, fumaric acid and maleic anhydride, metal salts thereof such as sodium salts, α,β-unsaturated carboxylic acid esters such as methyl acrylate, ethyl acrylate, n-propyl acrylate, methyl methacrylate and ethyl methacrylate, vinyl esters such as vinyl acetate and vinyl propionate, and unsaturated glycidyls such as glycidyl acrylate and glycidyl methacrylate.

Examples of the aromatic vinyl compound include styrene, o-methylstyrene, m-methylstyrene, p-methylstyrene, o,p-dimethylstyrene, methoxystyrene, vinylbenzoic acid, methyl vinylbenzoate, vinylbenzyl acetate, hydroxystyrene, p-chlorostyrene, divinylbenzene, α-methylstyrene, and allylbenzene.

Examples of the cyclic olefin include cyclic olefins having 3 to 30, preferably 3 to 20 carbon atoms such as cyclopentene, cycloheptene, norbornene, 5-methyl-2-norbornene, 5-ethylidene-2-norbornene, 5-vinyl-2-norbornene and tetracyclododecene.

As a monomer that is a raw material for the modified ethylene/α-olefin copolymer (B), for example, a monomer derived from a fossil fuel, a monomer derived from a biomass, or a monomer derived from a fossil fuel and a monomer derived from a biomass may be used. These monomers may be used alone, or used in combination of two or more thereof.

<Requirement (b-2)>

The requirement (b-2) is that the weight-average molecular weight (Mw) of the modified ethylene/α-olefin copolymer (B) is in the range of 1,000 to 100,000 as determined by gel permeation chromatography (GPC) under measurement conditions adopted in Examples described later.

The Mw of the modified ethylene/α-olefin copolymer (B) is 1,000 to 100,000, preferably 1,500 to 90,000, and more preferably 2,000 to 80,000.

When the weight-average molecular weight (Mw) of the modified ethylene/α-olefin copolymer (B) is in the above-described range, the resulting thermoplastic resin composition of the present invention is excellent in flexibility and mechanical strength with a good balance.

<Requirement (b-3)>

The requirement (b-3) is that the modified ethylene/α-olefin copolymer (B) is a modified copolymer having a substituent derived from a compound having a carbon-carbon unsaturated bond, and the content of a moiety derived from the compound having a carbon-carbon unsaturated bond in the modified copolymer is in the range of 1 to 70% by mass.

The modified ethylene/α-olefin copolymer (B) according to the present invention is a modified copolymer having a substituent derived from a compound having a carbon-carbon unsaturated bond. The graft position of the substituent is not particularly limited.

Examples of the compound having a carbon-carbon unsaturated bond include compounds having an aromatic ring, such as styrene and allylbenzene, compounds having an acid or acid-induced group, such as acid, acid anhydride, ester, amide and imide, compounds having an oxygen-containing group, such as alcohol, epoxy and ether, compounds having a nitrogen-containing group, such as amine, nitrile and isocyanate, compounds having a sulfur-containing group, such as sulfide, sulfoxide, sulfone and sulfonamide, and compounds having a silicon-containing group, such as vinyltrimethoxysilane.

Among these compounds having a carbon-carbon unsaturated bond, compounds having an aromatic ring, compounds having an acid or an acid derivative, and compounds having an oxygen-containing group are preferable, compounds having an aromatic ring, compounds having an acid or an acid derivative, and compounds having an alcoholic hydroxy group are more preferable, and compounds having an aromatic ring, and unsaturated carboxylic acids or unsaturated carboxylic acid derivatives are still more preferable.

Examples of compound having a carbon-carbon unsaturated bond and an aromatic ring include vinyl aromatic compounds in which a vinyl group is directly bonded to an aromatic ring, such as styrene, vinylnaphthalene and vinylpyridine, compounds in which a vinyl group is not directly bonded to an aromatic ring, such as allylbenzene and

allyl benzoate, and compounds having an ethynyl group, such as phenylacetylene, with the vinyl aromatic compounds being preferable from the viewpoint of easy availability and reactivity in graft reaction.

Examples of the aromatic vinyl compound include styrene, o-methylstyrene, m-methylstyrene, p-methylstyrene, o,p-dimethylstyrene, methoxystyrene, vinylbenzoic acid, methyl vinylbenzoate, vinylbenzyl acetate, hydroxystyrene, p-chlorostyrene, divinylbenzene, α-methylstyrene, vinylnaphthalene, vinylbiphenyl, vinylanthracene, vinyltriphenylene, vinylthiophene, and vinylpyridine. Among them, styrene is preferable from the viewpoint of availability and compatibility. These vinyl aromatic compounds may be used alone, or used in combination of two or more thereof. The graft position of the aromatic compound is not particularly limited.

When a vinyl aromatic compound is used as the compound having a carbon-carbon unsaturated bond, the content of a moiety derived from the vinyl aromatic compound in the modified copolymer (B) is 1 to 70% by mass, preferably 2 to 60% by mass, more preferably 3 to 45% by mass, and still more preferably 3 to 40% by mass. When the content of the moiety derived from the vinyl aromatic compound is in the above-described range, it is possible to obtain a thermoplastic resin composition excellent in balance between the softening effect and the compatibility with the X/Y block copolymer, and thus excellent in balance between flexibility and mechanical strength.

While the content of the above-described moiety can be determined by various known methods, a suitable method is known for each compound having a carbon-carbon unsaturated bond. For example, when a vinyl aromatic compound is used as the compound having a carbon-carbon unsaturated bond, the content of the moiety can be determined by $^1$H-NMR from a ratio of an area of peak(s) observed on the low magnetic field side and assigned to aromatic proton(s) and an area of peak(s) observed on the high magnetic field side and assigned to methyl/methylene/methine derived from the ethylene/α-olefin copolymer and the vinyl group of the vinyl aromatic.

When an unsaturated carboxylic acid is used, the content of the moiety can be determined by $^1$H-NMR from a ratio of an area of peak(s) assigned to a proton at the α-position of a carbonitrile group and an area of peak(s) assigned to methyl/methylene/methine derived from the ethylene/α-olefin copolymer.

When a compound containing a hydroxy group is used, the content of the moiety can be determined by a method in which the content of hydroxyl groups is determined by measuring a hydroxyl value using an acetylation method, and from the thus-obtained value, the amount of a hydroxy group-containing compound is calculated.

Examples of the unsaturated carboxylic acid include (meth)acrylic acid, maleic acid, fumaric acid, tetrahydrophthalic acid, itaconic acid, citraconic acid, crotonic acid, isocrotonic acid and nadic acid (endocis-bicyclo[2,2,1]hept-5-ene-2,3-dicarboxylic acid).

Examples of the derivative of the unsaturated carboxylic acid include acid anhydrides, esters, amides and imides of the unsaturated carboxylic acid.

Examples of the ester of the unsaturated carboxylic acid include esters and half esters, such as methyl (meth)acrylate, ethyl (meth)acrylate, maleic acid monoethyl ester, maleic acid diethyl ester, fumaric acid monomethyl ester, fumaric acid dimethyl ester, itaconic acid monomethyl ester and itaconic acid diethyl ester.

Examples of the unsaturated carboxylic acid amides include (meth)acrylamide, maleic acid monoamide, maleic acid diamide, maleic acid-N-monoethylamide, maleic acid-N,N-diethylamide, maleic acid-N-monobutylamide, maleic acid-N,N-dibutylamide, fumaric acid monoamide, fumaric acid diamide, fumaric acid-N-monobutylamide and fumaric acid-N,N-dibutylamide.

Examples of the unsaturated carboxylic acid imides include maleimide, N-butylmaleimide and N-phenylmaleimide.

Among those unsaturated carboxylic acids and derivatives thereof mentioned above, unsaturated dicarboxylic acids and derivatives thereof are more preferable, and, in particular, maleic acid and maleic anhydride are particularly preferable with the result that, for example, a by-product such as a homopolymer is hardly generated in a reaction for production of the modified copolymer (B).

When an unsaturated carboxylic acid and/or an unsaturated carboxylic acid derivative are used as the compound having a carbon-carbon unsaturated bond, the content of the unsaturated carboxylic acid and/or the unsaturated carboxylic acid derivative in the modified copolymer (B) is 1 to 70% by mass, preferably 1 to 40% by mass, and more preferably 1 to 20% by mass.

The modified copolymer (B) preferably satisfies the following requirement (b-4).

<Requirement (b-4)>

The requirement (b-4) is that the modified copolymer (B) is a modified product of an ethylene/α-olefin copolymer having a kinematic viscosity at 100°C in the range of 10 to 5,000 $mm^2/s$.

The kinematic viscosity is in the range of 10 to 5,000 $mm^2/s$, preferably 20 to 4,000 $mmm^2/s$, and more preferably 30 to 3,000 $mmm^2/s$.

<Requirement (b-5)>

The requirement (b-5) is that the Brookfield viscosity at 100°C, as measured according to JIS K7117-1, is in the range of 10 to 5,000,000 mPa·s.

The Brookfield viscosity is in the range of 10 to 5,000,000 mPa-s, and preferably 50 to 2,000,000 mPa·s. When higher flexibility is required, the Brookfield viscosity is in the range of more preferably 50 to 100,000 mPa·s, and still more preferably 100 to 10,000 mPa·s. When higher strength is required, the Brookfield viscosity is in the range of more preferably 100,000 to 2,000,000 mPa·s, and still more preferably 500,000 to 1,500,000 mPa·s.

Examples of the compound having an alcoholic hydroxy group include 2-hydroxyethyl (meth)acrylate, 2-hydroxypropyl (meth)acrylate, 3-hydroxypropyl (meth)acrylate, 2-hydroxy-3-phenoxy-propyl (meth)acrylate, glycerin mono(meth)acrylate, pentaerythritol mono(meth)acrylate, polyethylene glycol mono(meth)acrylate, allyl alcohol, 2-methyl-3-buten-1-ol, 2-methyl-3-buten-2-ol, 3-methyl-3-buten-1-ol, 10-undecen-1-ol, 1-octen-3-ol, 2-methanol norbornene, 2-butene-1,4-diol, hydroxystyrene, hydroxymethyl vinyl ether, hydroxyethyl vinyl ether, hydroxypropyl vinyl ether, hydroxybutyl vinyl ether, hydroxymethyl propenyl ether, hydroxyethyl propenyl ether, hydroxypropyl propenyl ether, hydroxybutyl propenyl ether, hydroxymethyl butenyl ether, hydroxyethyl butenyl ether, hydroxypropyl butenyl ether, hydroxybutyl butenyl ether, N-methylolacrylamide, 2-(meth)acryloyloxyethyl acetyl phosphate, glycerin monallyl ether, and allyloxy ethanol.

The modified ethylene/α-olefin copolymer (B) is a modified copolymer (B) in which an unmodified ethylene/α-olefin copolymer (B') satisfying the requirement (b-1) is modified, preferably graft-modified with the compound having a carbon-carbon unsaturated bond.

The content of the modified ethylene/α-olefin copolymer (B) in the thermoplastic resin composition of the present invention is 1 to 400 parts by mass, preferably 1 to 300 parts by mass and more preferably 1 to 200 parts by mass per 100 parts by mass of the thermoplastic resin (A). When the content of the modified ethylene/α-olefin copolymer (B) is in the above-described range, the resulting thermoplastic resin composition of the present invention is excellent in flexibility and mechanical strength with a good balance.

As described for the requirements (b-1) and (b-2), the modified ethylene/α-olefin copolymer (B) is made to become an amorphous copolymer with good fluidity by appropriately controlling the ethylene structural unit content and the weight-average molecular weight. This characteristic may provide a good softening effect on the X/Y block copolymer, and impart flexibility to the thermoplastic resin composition.

The modified ethylene/α-olefin copolymer (B) is a modified copolymer having a substituent derived from a compound having a carbon-carbon unsaturated bond as described for the requirement (b-3), and may be capable of providing a thermoplastic resin composition excellent in compatibility with the X/Y block copolymer and having excellent mechanical strength.

The method for producing the ethylene/α-olefin copolymer (B') is not particularly limited, and examples thereof include a method using a vanadium catalyst including a vanadium compound and an organoaluminum compound as described in patent literature JP H2(1990)-1163B and JP H2(1990)-7998B. Further, as a method for producing a copolymer with high polymerization activity, for example, a method using a catalytic system including a metallocene compounds such as zirconocene and an organoaluminum oxy compound (aluminoxane) as described in patent literature JP S61(1986)-221207A, JP H7(1995)-121969B, and JP2796376B may be employed, and this method is more preferred because the chlorine content of the resulting copolymer and the 2,1-insertion of α-olefin can be reduced. In the method using a vanadium catalyst, a very small amount of chlorine may remain in the resulting ethylene/α-olefin copolymer (B') because a larger amount of a chlorine compound is used for the cocatalyst as compared to the method using a metallocene catalyst.

Reduction of 2,1-insertion of α-olefin enables the ethylene chain in the copolymer molecule to be further reduced, so that the intramolecular crystallinity of ethylene can be suppressed, and therefore the ethylene/α-olefin copolymer (B') becomes an amorphous copolymer with good fluidity. This characteristic enables a thermoplastic resin composition with good flexibility to be obtained. The amount of 2,1-insertion of α-olefin is determined by analysis in $^{13}$C-NMR measurement in accordance with a method described in Patent Literature JP H7(1995)-145212A, and is preferably less than 1%, more preferably 0 to 0.5%, still more preferably 0 to 0.1%. An ethylene/α-olefin copolymer in which a peak is not observed in the range of 15.0 to 17.5 ppm is particularly preferable.

An ethylene/α-olefin copolymer (B') favorable in balance performance among, for example, molecular weight control, molecular weight distribution and non-crystallinity is obtained particularly by using the following method.

The ethylene/α-olefin copolymer (B') can be produced by copolymerizing ethylene and an α-olefin having 3 to 20 carbon atoms in the presence of an olefin polymerization catalyst including a bridged metallocene compound (P) represented by the following general formula [I], and at least one compound (Q) selected from the group consisting of an organometal compound (Q-1), an organoaluminum oxy compound (Q-2), and a compound (Q-3) that reacts with the bridged metallocene compound (P) to form an ion pair.

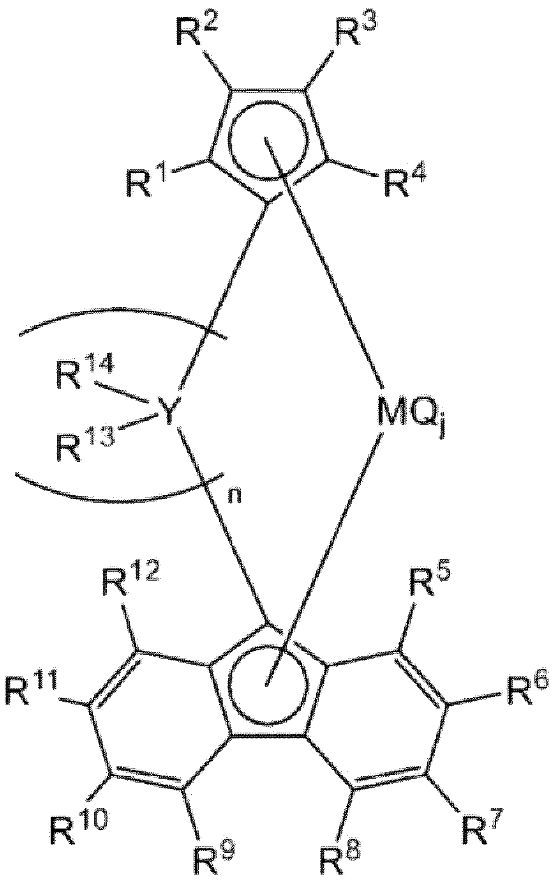

... [I]

[Bridged metallocene compound (P)]

The bridged metallocene compound (P) is represented by the above formula [I] . Y, M, $R^1$ to $R^{14}$, Q, n and j in the formula [I] are described below.

(Y, M, $R^1$ to $R^{14}$, Q, n and j)
Y is a Group XIV atom, is, for example, a carbon atom, a silicon atom, a germanium atom and a tin atom, and is preferably a carbon atom or a silicon atom, and more preferably a carbon atom.

M is a titanium atom, a zirconium atom or a hafnium atom, and preferably a zirconium atom.
$R^1$ to $R^{12}$ are each an atom or a substituent selected from the group consisting of a hydrogen atom, a hydrocarbon group having 1 to 20 carbon atoms, a silicon-containing group, a nitrogen-containing group, an oxygen-containing group, a halogen atom and a halogen-containing group, and may be the same or different. Adjacent substituents in $R^1$ to $R^{12}$ are optionally bonded to each other to form a ring, or are not required to be bonded to each other.
Examples of the hydrocarbon group having 1 to 20 carbon atoms include alkyl groups having 1 to 20 carbon atoms, cyclic saturated hydrocarbon groups having 3 to 20 carbon atoms, linear unsaturated hydrocarbon groups having 2 to 20 carbon atoms, cyclic unsaturated hydrocarbon groups having 3 to 20 carbon atoms, alkylene groups having 1 to 20 carbon atoms and arylene groups having 6 to 20 carbon atoms.
Examples of the alkyl groups having 1 to 20 carbon atoms include straight saturated hydrocarbon groups such as a methyl group, an ethyl group, a n-propyl group, an allyl group, a n-butyl group, a n-pentyl group, a n-hexyl group, a n-heptyl group, a n-octyl group, a n-nonyl group and a n-decanyl group, branched saturated hydrocarbon groups such as an isopropyl group, an isobutyl group, a s-butyl group, a t-butyl group, a t-amyl group, a neopentyl group, a 3-methylpentyl group, a 1,1-diethylpropyl group, a 1,1-dimethylbutyl group, a 1-methyl-1-propylbutyl group, a 1,1-propylbutyl group, a 1,1-dimethyl-2-methylpropyl group and a 1-methyl-1-isopropyl-2-methylpropyl group, and a cyclopropylmethyl group. The number of carbon atoms in such an alkyl group is preferably 1 to 6.
Examples of the cyclic saturated hydrocarbon groups having 3 to 20 carbon atoms include cyclic saturated hydrocarbon groups such as a cyclopropyl group, a cyclobutyl group, a cyclopentyl group, a cyclohexyl group, a cycloheptyl group, a cyclooctyl group, a norbornenyl group, a 1-adamantyl group and a 2-adamantyl group, and groups

resulting from the substitution of cyclic saturated hydrocarbon groups with a hydrocarbon group having 1 to 17 carbon atoms in place of a hydrogen atom, such as a 3-methylcyclopentyl group, a 3-methylcyclohexyl group, a 4-methylcyclohexyl group, a 4-cyclohexylcyclohexyl group and a 4-phenylcyclohexyl group. The number of carbon atoms in such a cyclic saturated hydrocarbon group is preferably 5 to 11.

Examples of the linear unsaturated hydrocarbon groups having 2 to 20 carbon atoms include alkenyl groups such as an ethenyl group (vinyl group), a 1-propenyl group, a 2-propenyl group (allyl group) and a 1-methylethenyl group (isopropenyl group), and alkynyl groups such as an ethynyl group, a 1-propynyl group and a 2-propynyl group (propargyl group). The number of carbon atoms in such a linear unsaturated hydrocarbon group is preferably 2 to 4.

Examples of the cyclic unsaturated hydrocarbon groups having 3 to 20 carbon atoms include cyclic unsaturated hydrocarbon groups such as a cyclopentadienyl group, a norbornyl group, a phenyl group, a naphthyl group, an indenyl group, an azulenyl group, a phenanthryl group and an anthracenyl group, groups resulting from the substitution of cyclic unsaturated hydrocarbon groups with a hydrocarbon group having 1 to 15 carbon atoms in place of a hydrogen atom, such as a 3-methylphenyl group (m-tolyl group), a 4-methylphenyl group (p-tolyl group), a 4-ethylphenyl group, a 4-t-butylphenyl group, a 4-cyclohexylphenyl group, a biphenylyl group, a 3,4-dimethylphenyl group, a 3,5-dimethylphenyl group and a 2,4,6-trimethylphenyl group (mesityl group), and groups resulting from the substitution of straight hydrocarbon groups or branched saturated hydrocarbon groups with a cyclic saturated hydrocarbon group or cyclic unsaturated hydrocarbon group having 3 to 19 carbon atoms in place of a hydrogen atom, such as a benzyl group and a cumyl group. The number of carbon atoms in such a cyclic unsaturated hydrocarbon group is preferably 6 to 10.

Examples of the alkylene groups having 1 to 20 carbon atoms include a methylene group, an ethylene group, a dimethylmethylene group (isopropylidene group), an ethylmethylene group, a methylethylene group and a n-propylene group. The number of carbon atoms in such an alkylene group is preferably 1 to 6.

Examples of the arylene groups having 6 to 20 carbon atoms include an o-phenylene group, a m-phenylene group, a p-phenylene group and a 4,4'-biphenylylene group. The number of carbon atoms in such an arylene group is preferably 6 to 12.

Examples of the silicon-containing group include groups resulting from the substitution of hydrocarbon groups having 1 to 20 carbon atoms with a silicon atom in place of a carbon atom, for example, alkylsilyl groups such as a trimethylsilyl group, a triethylsilyl group, a t-butyldimethylsilyl group and a triisopropylsilyl group, arylsilyl groups such as a dimethylphenylsilyl group, a methyldiphenylsilyl group and a t-butyldiphenylsilyl group, and a pentamethyldisilanyl group and a trimethylsilylmethyl group. The number of carbon atoms in such an alkylsilyl group is preferably 1 to 10, and the number of carbon atoms in such an arylsilyl group is preferably 6 to 18.

Examples of the nitrogen-containing group include an amino group, and groups resulting from the substitution of the above hydrocarbon groups having 1 to 20 carbon atoms or silicon-containing groups with a nitrogen atom in place of a =CH- structural unit, with a nitrogen atom to which a hydrocarbon group having 1 to 20 carbon atoms is bonded in place of a $-CH_2-$ structural unit, or with a nitrogen atom to which such a hydrocarbon group having 1 to 20 carbon atoms is bonded or a nitrile group in place of a $-CH_3$ structural unit, such as a dimethylamino group, a diethylamino group, an N-morpholinyl group, a dimethylaminomethyl group, a cyano group, a pyrrolidinyl group, a piperidinyl group and a pyridinyl group, and an N-morpholinyl group and a nitro group. The nitrogen-containing group is preferably a dimethylamino group or an N-morpholinyl group.

Examples of the oxygen-containing group include a hydroxyl group, groups resulting from the substitution of the above hydrocarbon groups having 1 to 20 carbon atoms, silicon-containing groups or nitrogen-containing groups with an oxygen atom or a carbonyl group in place of a $-CH_2-$structural unit, or with an oxygen atom to which a hydrocarbon group having 1 to 20 carbon atoms is bonded in place of a $-CH_3$ structural unit, such as a methoxy group, an ethoxy group, a t-butoxy group, a phenoxy group, a trimethylsiloxy group, a methoxyethoxy group, a hydroxymethyl group, a methoxymethyl group, an ethoxymethyl group, a t-butoxymethyl group, a 1-hydroxyethyl group, a 1-methoxyethyl group, a 1-ethoxyethyl group, a 2-hydroxyethyl group, a 2-methoxyethyl group, a 2-ethoxyethyl group, a n-2-oxabutylene group, a n-2-oxapentylene group, a n-3-oxapentylene group, an aldehyde group, an acetyl group, a propionyl group, a benzoyl group, a trimethylsilylcarbonyl group, a carbamoyl group, a methylaminocarbonyl group, a carboxy group, a methoxycarbonyl group, a carboxymethyl group, an ethocarboxymethyl group, a carbamoylmethyl group, a furanyl group and a pyranyl group. The oxygen-containing group is preferably a methoxy group.

Examples of the halogen atom include Group XVII atoms such as fluorine, chlorine, bromine and iodine.

Examples of the halogen-containing group include groups resulting from the substitution of the above hydrocarbon groups having 1 to 20 carbon atoms, silicon-containing groups, nitrogen-containing groups or oxygen-containing groups with a halogen atom in place of a hydrogen atom, such as a trifluoromethyl group, a tribromomethyl group, a pentafluoroethyl group and a pentafluorophenyl group.

Q is selected as a combination of the same or different members of a halogen atom, a hydrocarbon group having 1 to 20 carbon atoms, an anion ligand, and a neutral ligand capable of coordinating to a lone pair of electrons.

The details of the halogen atom and the hydrocarbon group having 1 to 20 carbon atoms are as described above. When Q is the halogen atom, Q is preferably a chlorine atom. When Q is the hydrocarbon group having 1 to 20 carbon

atoms, the number of carbon atoms in the hydrocarbon group is preferably 1 to 7.

Examples of the anion ligand include alkoxy groups such as a methoxy group, a t-butoxy group and a phenoxy group, carboxylate groups such as acetate and benzoate, and sulfonate groups such as methylate and tosylate.

Examples of the neutral ligand capable of coordinating to a lone pair of electrons include phosphororganic compounds such as trimethylphosphine, triethylphosphine, triphenylphosphine and diphenylmethylphosphine, and ether compounds such as tetrahydrofuran, diethyl ether, dioxane and 1,2-dimethoxyethane.

j is an integer of 1 to 4, and is preferably 2.

n is an integer of 1 to 4, preferably 1 or 2, still more preferably 1.

$R^{13}$ and $R^{14}$ are each an atom or a substituent selected from the group consisting of a hydrogen atom, a hydrocarbon group having 1 to 20 carbon atoms, an aryl group, a substituted aryl group, a silicon-containing group, a nitrogen-containing group, an oxygen-containing group, a halogen atom and a halogen-containing group, and may be the same or different. $R^{13}$ and $R^{14}$ are optionally bonded to each other to form a ring, or are not bonded to each other.

The details of the hydrocarbon group having 1 to 20 carbon atoms, the silicon-containing group, the nitrogen-containing group, the oxygen-containing group, the halogen atom and the halogen-containing group are as described above.

Examples of the aryl group are partially overlapped with examples of the cyclic unsaturated hydrocarbon groups having 3 to 20 carbon atoms described above, and include substituents derived from an aromatic compound, such as a phenyl group, a 1-naphthyl group, a 2-naphthyl group, an anthracenyl group, a phenanthrenyl group, a tetracenyl group, a chrysenyl group, a pyrenyl group, an indenyl group, an azulenyl group, a pyrrolyl group, a pyridyl group, a furanyl group and a thiophenyl group. The aryl group is preferably a phenyl group or a 2-naphthyl group.

Examples of the aromatic compound include aromatic hydrocarbons and heterocyclic aromatic compounds, such as benzene, naphthalene, anthracene, phenanthrene, tetracene, chrysene, pyrene, indene, azulene, pyrrole, pyridine, furan and thiophene.

Examples of such a substituted aryl group are partially overlapped with examples of the cyclic unsaturated hydrocarbon groups having 3 to 20 carbon atoms, and include groups resulting from the substitution of the aryl group with at least one substituent selected from the group consisting of a hydrocarbon group having 1 to 20 carbon atoms, an aryl group, a silicon-containing group, a nitrogen-containing group, an oxygen-containing group, a halogen atom and a halogen-containing group in place of one or more hydrogen atoms, and specifically include a 3-methylphenyl group (m-tolyl group), a 4-methylphenyl group (p-tolyl group), a 3-ethylphenyl group, a 4-ethylphenyl group, a 3,4-dimethylphenyl group, a 3,5-dimethylphenyl group, a biphenylyl group, a 4-(trimethylsilyl)phenyl group, a 4-aminophenyl group, a 4-(dimethylamino)phenyl group, a 4-(diethylamino)phenyl group, a 4-morpholinylphenyl group, a 4-methoxyphenyl group, a 4-ethoxyphenyl group, a 4-phenoxyphenyl group, a 3,4-dimethoxyphenyl group, a 3,5-dimethoxyphenyl group, a 3-methyl-4-methoxyphenyl group, a 3,5-dimethyl-4-methoxyphenyl group, a 3-(trifluoromethyl)phenyl group, a 4-(trifluoromethyl)phenyl group, a 3-chlorophenyl group, a 4-chlorophenyl group, a 3-fluorophenyl group, a 4-fluorophenyl group, a 5-methylnaphthyl group and a 2-(6-methyl)pyridyl group.

Among them, a bridged metallocene compound (P) in which either or both of $R^{13}$ and $R^{14}$ are independently aryl groups is preferred, and a bridged metallocene compound (P) in which both are independently aryl groups is more preferred.

In particular, the bridged metallocene compound (P) in which both $R^{13}$ and $R^{14}$ are each independently an aryl group is high in polymerization activity to copolymerization of ethylene and an $\alpha$-olefin and the bridged metallocene compound (P) is used to thereby selectively stop polymerization by hydrogen introduction into a molecular terminal, and therefore the ethylene/$\alpha$-olefin copolymer (B') obtained has few unsaturated bonds. Therefore, an ethylene/$\alpha$-olefin copolymer (B') high in degree of saturation and excellent in heat resistance can be obtained by only performing a simpler hydrogenation operation or even without any hydrogenation operation, and is also excellent in terms of cost. An ethylene/$\alpha$-olefin copolymer (B') obtained from the compound (P) is high in random copolymerization properties, and thus has a controlled molecular weight distribution.

In the bridged metallocene compound (P) represented by the above formula [I], n is preferably 1. The bridged metallocene compound (hereinafter, also referred to as "bridged metallocene compound (P-1)".) is represented by the following general formula (formula 1).

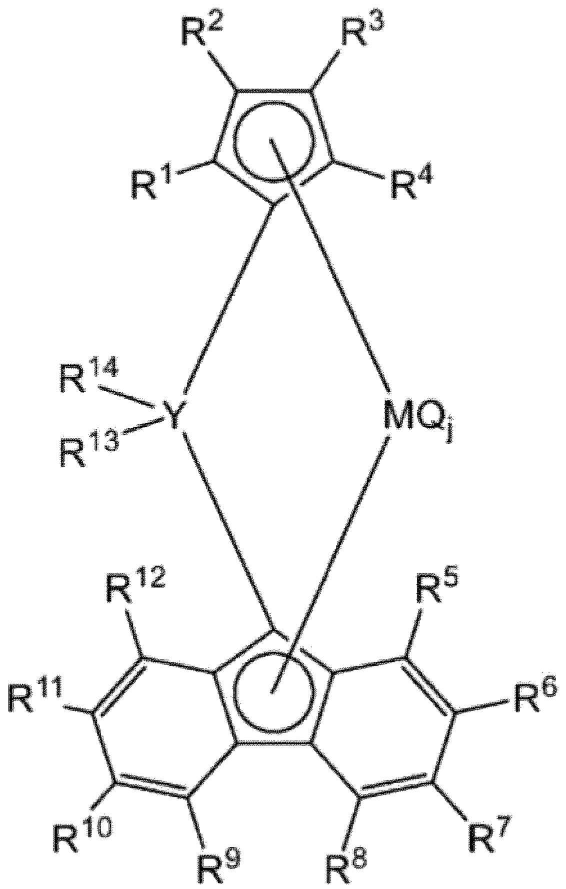

• • • (formula 1)

In formula 1, for example, the definitions of Y, M, $R^1$ to $R^{14}$, Q and j are as described above.

The bridged metallocene compound (P-1) is obtained by a simplified production process and is reduced in production cost, as compared with a compound in which n in the above formula [I] is an integer of 2 to 4, and an advantage thus obtained is that the production cost of the ethylene/α-olefin copolymer (B') is reduced by using the bridged metallocene compound (P-1).

In the bridged metallocene compound (P) represented by the above general formula [I] and the bridged metallocene compound (P-1) represented by the above general formula (formula 1), M is further preferably a zirconium atom. A case where ethylene and one or more monomers selected from α-olefins having 3 to 20 carbon atoms are copolymerized in the presence of an olefin polymerization catalyst including the above-mentioned bridged metallocene compound in which M is a zirconium atom has the advantages of high polymerization activity and a reduction in production cost of the ethylene/α-olefin copolymer (B'), as compared with such a case where M is a titanium atom or a hafnium atom.

In an aspect of the present invention, it is preferable that one or both of $R^{13}$ and $R^{14}$ be aryl groups, and it is more preferable that both $R^{13}$ and $R^{14}$ be aryl groups, and one of $R^2$ and $R^3$ be a saturated hydrocarbon group be a saturated hydrocarbon group having 4 carbon atoms.

Examples of the bridged metallocene compound (P) include

[dimethylmethylene ($\eta^5$-cyclopentadienyl) ($\eta^5$-fluorenyl)]zirconium dichloride, [dimethylmethylene($\eta^5$-cyclopentadienyl) ($\eta^5$-2,7-di-t-butylfluorenyl)]zirconium dichloride, [dimethylmethylene($\eta^5$-cyclopentadienyl) ($\eta^5$-3,6-dit-butylfluorenyl)]zirconium dichloride, [dimethylmethylene($\eta^5$-cyclopentadienyl)($\eta^5$-octamethyloctahydrodibenzofluorenyl)]zirconium dichloride, [dimethylmethylene ($\eta^5$-cyclopentadienyl) ($\eta^5$-tetramethyloctahydrodibenzofluorenyl)]zirconium dichloride,

[cyclohexylidene ($\eta^5$-cyclopentadienyl) ($\eta^5$-fluorenyl)]zirconium dichloride, [cyclohexylidene($\eta^5$-cyclopentadienyl) ($\eta^5$-2,7-di-t-butylfluorenyl)]zirconium dichloride, [cyclohexylidene($\eta^5$-cyclopentadienyl) ($\eta^5$-3,6-di-t-butylfluorenyl)] zirconium dichloride, [cyclohexylidene($\eta^5$-cyclopentadienyl)($\eta^5$-octamethyloctahydrodibenzofluorenyl)]zirconium dichloride, [cyclohexylidene($\eta^5$-cyclopentadienyl) ($\eta^5$-tetramethyloctahydrodibenzofluorenyl)]zirconium dichloride, [diphenylmethylene($\eta^5$-cyclopentadienyl) ($\eta^5$-fluorenyl)]zirconium dichloride, [diphenylmethylene($\eta^5$-cyclopentadienyl) ($\eta^5$-2,7-di-t-butylfluorenyl)]zirconium dichloride, [diphenylmethylene ($\eta^5$-2-methyl-4-t-butylcyclopentadienyl) ($\eta^5$-2,7-di-t-butylfluorenyl)]zirconium dichloride, [diphenylmethylene ($\eta^5$-cyclopentadienyl) ($\eta^5$-3, 6-dit-butylfluorenyl)]zirconium dichloride, [diphenylmethylene ($\eta^5$-cyclopentadienyl) ($\eta^5$-octamethyloctahydrodibenzofluorenyl)]zir-

conium dichloride, [diphenylmethylene{$\eta^5$-(2-methyl-4-i-propylcyclopentadienyl)}($\eta^5$-octamethyloctahydrodibenzofluorenyl)]zirconium dichloride, [diphenylmethylene($\eta^5$-cyclopentadienyl) ($\eta^5$-tetramethyloctahydrodibenzofluorenyl)]zirconium dichloride,

[methylphenylmethylene($\eta^5$-cyclopentadienyl) ($\eta^5$-fluorenyl)]zirconium dichloride, [methylphenylmethylene($\eta^5$-cyclopentadienyl) ($\eta^5$-2,7-di-t-butylfluorenyl)]zirconium dichloride, [methylphenylmethylene ($\eta^5$-cyclopentadienyl) ($\eta^5$-3,6-di-t-butylfluorenyl)]zirconium dichloride, [methylphenylmethylene ($\eta^5$-cyclopentadienyl) ($\eta^5$-octamethyloctahydrodibenzofluorenyl)]zirconium dichloride, [methylphenylmethylene ($\eta^5$-cyclopentadienyl) ($\eta^5$-tetramethyloctahydrodibenzofluorenyl)]zirconium dichloride,

[methyl(3-methylphenyl) methylene($\eta^5$-cyclopentadienyl) ($\eta^5$-fluorenyl)]zirconium dichloride, [methyl(3-methylphenyl)methylene($\eta^5$-cyclopentadienyl) ($\eta^5$-2,7-di-t-butylfluorenyl)]zirconium dichloride, [methyl(3-methylphenyl) methylene($\eta^5$-cyclopentadienyl) ($\eta^5$-3, 6-di-t-butylfluorenyl)]zirconium dichloride, [methyl(3-methylphenyl) methylene ($\eta^5$-cyclopentadienyl) ($\eta^5$-octamethyloctahydrodibenzofluorenyl)]zirconium dichloride, [methyl(3-methylphenyl) methylene($\eta^5$-cyclopentadienyl) ($\eta^5$-tetramethyloctahydrodibenzofluorenyl)]zirconium dichloride,

[methyl(4-methylphenyl) methylene($\eta^5$-cyclopentadienyl) ($\eta^5$-fluorenyl)]zirconium dichloride, [methyl(4-methylphenyl)methylene($\eta^5$-cyclopentadienyl) ($\eta^5$-2,7-di-t-butylfluorenyl)]zirconium dichloride, [methyl(4-methylphenyl) methylene($\eta^5$-cyclopentadienyl) ($\eta^5$-3, 6-di-t-butylfluorenyl)]zirconium dichloride, [methyl(4-methylphenyl) methylene ($\eta^5$-cyclopentadienyl) ($\eta^5$-octamethyloctahydrodibenzofluorenyl)]zirconium dichloride, [methyl(4-methylphenyl)methylene ($\eta^5$-cyclopentadienyl) ($\eta^5$-tetramethyloctahydrodibenzofluorenyl)]zirconium dichloride,

[diphenylsilylene($\eta^5$-cyclopentadienyl) ($\eta^5$-fluorenyl)]zirconium dichloride, [diphenylsilylene($\eta^5$-cyclopentadienyl) ($\eta^5$-2,7-di-t-butylfluorenyl)]zirconium dichloride, [diphenylsilylene($\eta^5$-cyclopentadienyl) ($\eta^5$-3,6-dit-butylfluorenyl)] zirconium dichloride, [diphenylsilylene($\eta^5$-cyclopentadienyl)($\eta^5$-octamethyloctahydrodibenzofluorenyl)]zirconium dichloride, [diphenylsilylene ($\eta^5$-cyclopentadienyl) ($\eta^5$-tetramethyloctahydrodibenzofluorenyl)]zirconium dichloride,

[bis(3-methylphenyl)silylene($\eta^5$-cyclopentadienyl)($\eta^5$-fluorenyl)]zirconium dichloride, [bis(3-methylphenyl)silylene ($\eta^5$-cyclopentadienyl) ($\eta^5$-2,7-di-t-butylfluorenyl)]zirconium dichloride, [bis(3-methylphenyl)silylene($\eta^5$-cyclopentadienyl)($\eta^5$-3,6-di-t-butylfluorenyl)]zirconium dichloride, [bis(3-methylphenyl) silylene ($\eta^5$-cyclopentadienyl)($\eta^5$-octamethyloctahydrodibenzofluorenyl)]zirconium dichloride, [bis(3-methylphenyl)silylene($\eta^5$-cyclopentadienyl)($\eta^5$-tetramethyloctahydrodibenzofluorenyl)]zirconium dichloride,

[dicyclohexylsilylene($\eta^5$-cyclopentadienyl)($\eta^5$-fluorenyl)]zirconium dichloride, [dicyclohexylsilylene($\eta^5$-cyclopentadienyl)($\eta^5$-2,7-di-t-butylfluorenyl)]zirconium dichloride, [dicyclohexylsilylene($\eta^5$-cyclopentadienyl) ($\eta^5$-3,6-di-t-butylfluorenyl) ]zirconium dichloride, [dicyclohexylsilylene($\eta^5$-cyclopentadienyl) ($\eta^5$-octamethyloctahydrodibenzofluorenyl)]zirconium dichloride, [dicyclohexylsilylene ($\eta^5$-cyclopentadienyl) ($\eta^5$-tetramethyloctahydrodibenzofluorenyl)] zirconium dichloride,

[ethylene ($\eta^5$-cyclopentadienyl) ($\eta^5$-fluorenyl)]zirconium dichloride, [ethylene($\eta^5$-cyclopentadienyl)($\eta^5$-2,7-di-t-butylfluorenyl)]zirconium dichloride, [ethylene($\eta^5$-cyclopentadienyl) ($\eta^5$-3,6-di-t-butylfluorenyl)]zirconium dichloride, [ethylene ($\eta^5$-cyclopentadienyl) ($\eta^5$-octamethyloctahydrodibenzofluorenyl)]zirconium dichloride, [ethylene($\eta^5$-cyclopentadienyl)($\eta^5$-tetramethyloctahydrodibenzofluorenyl)]zirconium dichloride,

ethylene [$\eta^5$-(3-tert-butyl-5-methylcyclopentadienyl)]($\eta^5$-fluorenyl)zirconium dichloride, ethylene[$\eta^5$-(3-tert-butyl-5-methylcyclopentadienyl)][$\eta^5$-(3,6-di-tert-butylfluorenyl)]zirconium dichloride, ethylene[$\eta^5$-(3-tert-butyl-5-methylcyclopentadienyl)][$\eta^5$-(2,7-di-tert-butylfluorenyl)]zirconium dichloride, ethylene[$\eta^5$-(3-tert-butyl-5-methylcyclopentadienyl)] (octamethyloctahydrodibenzofluorenyl) zirconium dichloride, ethylene[$\eta^5$-(3-tert-butyl-5-methylcyclopentadienyl)] (benzofluorenyl)zirconium dichloride, ethylene[$\eta^5$-(3-tert-butyl-5-methylcyclopentadienyl)] (dibenzofluorenyl)zirconium dichloride, ethylene[$\eta^5$-(3-tert-butyl-5-methylcyclopentadienyl)] (octahydrodibenzofluorenyl)zirconium dichloride, ethylene[$\eta^5$-(3-tert-butyl-5-methylcyclopentadienyl)][$\eta^5$-(2,7-diphenyl-3,6-di-tert-butylfluorenyl)]zirconium dichloride, ethylene[$\eta^5$-(3-tert-butyl-5-methylcyclopentadienyl)][$\eta^5$-(2,7-dimethyl-3,6-di-tert-butylfluorenyl)] zirconium dichloride,

ethylene[$\eta^5$-(3-tert-butylcyclopentadienyl)]($\eta^5$-fluorenyl)zirconium dichloride, ethylene[$\eta^5$-(3-tert-butylcyclopentadienyl)][$\eta^5$-(3,6-di-tert-butylfluorenyl)]zirconium dichloride, ethylene[$\eta^5$-(3-tert-butylcyclopentadienyl)][$\eta^5$-(2,7-di-tert-butylfluorenyl)]zirconium dichloride, ethylene[$\eta^5$-(3-tert-butylcyclopentadienyl)] (octamethyloctahydrodibenzofluorenyl)z irconium dichloride, ethylene[$\eta^5$-(3-tert-butylcyclopentadienyl)] (benzofluorenyl)zirconium dichloride, ethylene [$\eta^5$-(3-tert-butylcyclopentadienyl)](dibenzofluorenyl)zirconium dichloride, ethylene [$\eta^5$-(3-tert-butylcyclopentadienyl)] (octahydrodibenzofluorenyl)zirconium dichloride, ethylene[$\eta^5$-(3-tert-butylcyclopentadienyl)][$\eta^5$-(2,7-diphenyl-3,6-di-tert-butylfluorenyl)]zirconium dichloride, ethylene[$\eta^5$-(3-tert-butylcyclopentadienyl)][$\eta^5$-(2,7-dimethyl-3,6-di-tert-butylfluorenyl)]zirconium dichloride,

ethylene[$\eta^5$-(3-n-butylcyclopentadienyl)]($\eta^5$-fluorenyl)zirconium dichloride, ethylene[$\eta^5$-(3-n-butylcyclopentadienyl)][$\eta^5$-(3,6-di-tert-butylfluorenyl)]zirconium dichloride, ethylene[$\eta^5$-(3-n-butylcyclopentadienyl)][$\eta^5$-(2,7-di-tert-butylfluorenyl)]zirconium dichloride, ethylene[$\eta^5$-(3-n-butylcyclopentadienyl)](octamethyloctahydrodibenzofluorenyl)z irconium dichloride, ethylene[$\eta^5$-(3-n-butylcyclopentadienyl)](benzofluorenyl)zirconium dichloride, ethylene[$\eta^5$-(3-n-butylcyclopentadienyl)](dibenzofluorenyl)zirconium dichloride, ethylene[$\eta^5$-(3-n-butylcyclopentadienyl)] (octahy-

drodibenzofluorenyl)zirconium dichloride, ethylene[$\eta^5$-(3-n-butylcyclopentadienyl)][$\eta^5$-(2,7-diphenyl-3,6-di-tert-butylfluorenyl)]zirconium dichloride, ethylene[$\eta^5$-(3-n-butylcyclopentadienyl)][$\eta^5$-(2,7-dimethyl-3,6-di-tert-butylfluorenyl)]zirconium dichloride,

diphenylmethylene[$\eta^5$-(3-tert-butyl-5-methylcyclopentadienyl)]($\eta^5$-fluorenyl) zirconium dichloride, diphenylmethylene[$\eta^5$-(3-tert-butyl-5-methylcyclopentadienyl)][$\eta^5$-(3,6-di-tert-butylfluorenyl)]zirconium dichloride, diphenylmethylene[$\eta^5$-(3-tert-butyl-5-methylcyclopentadienyl)][$\eta^5$-(2,7-di-tert-butylfluorenyl)]zirconium dichloride, diphenylmethylene[$\eta^5$-(3-tert-butyl-5-methylcyclopentadienyl)] (octamethyloctahydrodibenzofluorenyl) zirconium dichloride, diphenylmethylene[$\eta^5$-(3-tert-butyl-5-methylcyclopentadienyl)] (benzofluorenyl)zirconium dichloride, diphenylmethylene[$\eta^5$-(3-tert-butyl-5-methylcyclopentadienyl)] (dibenzofluorenyl)zirconium dichloride, diphenylmethylene[$\eta^5$-(3-tert-butyl-5-methylcyclopentadienyl)] (octahydrodibenzofluorenyl)zirconium dichloride, diphenylmethylene[$\eta^5$-(3-tert-butyl-5-methylcyclopentadienyl)][$\eta^5$-(2,7-diphenyl-3,6-di-tert-butylfluorenyl)]zirconium dichloride, diphenylmethylene[$\eta^5$-(3-tert-butyl-5-methylcyclopentadienyl)][$\eta^5$-(2,7-dimethyl-3,6-di-tert-butylfluorenyl)]zirconium dichloride,

diphenylmethylene[$\eta^5$-(3-tert-butylcyclopentadienyl)]($\eta^5$-fluorenyl) zirconium dichloride, diphenylmethylene[$\eta^5$-(3-tert-butylcyclopentadienyl)][$\eta^5$-(3,6-di-tert-butylfluorenyl)]zirconium dichloride, diphenylmethylene[$\eta^5$-(3-tert-butylcyclopentadienyl)][$\eta^5$-(2,7-di-tert-butylfluorenyl)]zirconium dichloride, diphenylmethylene[$\eta^5$-(3-tert-butylcyclopentadienyl)] (octamethyloctahydrodibenzofluorenyl)z irconium dichloride, diphenylmethylene[$\eta^5$-(3-tert-butylcyclopentadienyl)] (benzofluorenyl)zirconium dichloride, diphenylmethylene[$\eta^5$-(3-tert-butylcyclopentadienyl)](dibenzofluorenyl)zirconium dichloride, diphenylmethylene[$\eta^5$-(3-tert-butylcyclopentadienyl)] (octahydrodibenzofluorenyl)zirconium dichloride, diphenylmethylene[$\eta^5$-(3-tert-butylcyclopentadienyl)][$\eta^5$-(2,7-diphenyl-3,6-di-tert-butylfluorenyl)] zirconium dichloride, diphenylmethylene[$\eta^5$-(3-tert-butylcyclopentadienyl)][$\eta^5$-(2,7-dimethyl-3,6-di-tert-butylfluorenyl)]zirconium dichloride,

diphenylmethylene[$\eta^5$-(3-n-butylcyclopentadienyl)]($\eta^5$-fluorenyl)zirconium dichloride, diphenylmethylene[$\eta^5$-(3-n-butylcyclopentadienyl)][$\eta^5$-(3,6-di-tert-butylfluorenyl)]zirconium dichloride, diphenylmethylene[$\eta^5$-(3-n-butylcyclopentadienyl)][$\eta^5$-(2,7-di-tert-butylfluorenyl)]zirconium dichloride, diphenylmethylene[$\eta^5$-(3-n-butylcyclopentadienyl)] (octamethyloctahydrodibenzofluorenyl)z irconium dichloride, diphenylmethylene[$\eta^5$-(3-n-butylcyclopentadienyl)] (benzofluorenyl)zirconium dichloride, diphenylmethylene[$\eta^5$-(3-n-butylcyclopentadienyl)](dibenzofluorenyl)zirconium dichloride, diphenylmethylene[$\eta^5$-(3-n-butylcyclopentadienyl)] (octahydrodibenzofluorenyl)zirconium dichloride, diphenylmethylene[$\eta^5$-(3-n-butylcyclopentadienyl)][$\eta^5$-(2,7-diphenyl-3,6-di-tert-butylfluorenyl)]zirconium dichloride, diphenylmethylene[$\eta^5$-(3-n-butylcyclopentadienyl)][$\eta^5$-(2,7-dimethyl-3,6-di-tert-butylfluorenyl)]zirconium dichloride,

di(p-tolyl)methylene[$\eta^5$-(3-tert-butyl-5-methylcyclopentadienyl)]($\eta^5$-fluorenyl) zirconium dichloride, di(p-tolyl)methylene[$\eta^5$-(3-tert-butyl-5-methylcyclopentadienyl)][$\eta^5$-(3,6-di-tert-butylfluorenyl)]zirconium dichloride, di(p-tolyl) methylene[$\eta^5$-(3-tert-butyl-5-methylcyclopentadienyl)][$\eta^5$-(2,7-di-tert-butylfluorenyl)]zirconium dichloride, di(p-tolyl)methylene[$\eta^5$-(3-tert-butyl-5-methylcyclopentadienyl)] (octamethyloctahydrodibenzofluorenyl) zirconium dichloride, di(p-tolyl)methylene[$\eta^5$-(3-tert-butyl-5-methylcyclopentadienyl)](benzofluorenyl)zirconium dichloride, di(p-tolyl) methylene[$\eta^5$-(3-tert-butyl-5-methylcyclopentadienyl)] (dibenzofluorenyl)zirconium dichloride, di(p-tolyl)methylene [$\eta^5$-(3-tert-butyl-5-methylcyclopentadienyl)] (octahydrodibenzofluorenyl)zirconium dichloride, di(p-tolyl)methylene [$\eta^5$-(3-tert-butyl-5-methylcyclopentadienyl)][$\eta^5$-(2,7-diphenyl-3,6-di-tert-butylfluorenyl)]zirconium dichloride, di(p-tolyl)methylene[$\eta^5$-(3-tert-butyl-5-methylcyclopentadienyl)][$\eta^5$-(2,7-dimethyl-3,6-di-tert-butylfluorenyl)]zirconium dichloride,

di(p-tolyl)methylene[$\eta^5$-(3-tert-butylcyclopentadienyl)]($\eta^5$-fluorenyl)zirconium dichloride, di(p-tolyl)methylene[$\eta^5$-(3-tert-butylcyclopentadienyl)][$\eta^5$-(3,6-di-tert-butylfluorenyl)]zirconium dichloride, di(p-tolyl)methylene[$\eta^5$-(3-tert-butylcyclopentadienyl)][$\eta^5$-(2,7-di-tert-butylfluorenyl)]zirconium dichloride, di(p-tolyl)methylene[$\eta^5$-(3-tert-butylcyclopentadienyl)] (octamethyloctahydrodibenzofluorenyl)z irconium dichloride, di(p-tolyl)methylene[$\eta^5$-(3-tert-butylcyclopentadienyl)] (benzofluorenyl)zirconium dichloride, di(p-tolyl)methylene[$\eta^5$-(3-tert-butylcyclopentadienyl)] (dibenzofluorenyl)zirconium dichloride, di(p-tolyl)methylene[$\eta^5$-(3-tert-butylcyclopentadienyl)] (octahydrodibenzofluorenyl) zirconium dichloride, di(p-tolyl)methylene[$\eta^5$-(3-tert-butylcyclopentadienyl)][$\eta^5$-(2,7-diphenyl-3,6-di-tert-butylfluorenyl)]zirconium dichloride, di(p-tolyl)methylene[$\eta^5$-(3-tert-butylcyclopentadienyl)][$\eta^5$-(2,7-dimethyl-3,6-di-tert-butylfluorenyl)]zirconium dichloride,

di(p-tolyl)methylene[$\eta^5$-(3-n-butylcyclopentadienyl)]($\eta^5$-fluorenyl)zirconium dichloride, di(p-tolyl)methylene[$\eta^5$-(3-n-butylcyclopentadienyl)][$\eta^5$-(3,6-di-tert-butylfluorenyl)]zirconium dichloride, di(p-tolyl)methylene[$\eta^5$-(3-n-butylcyclopentadienyl)][$\eta^5$-(2,7-di-tert-butylfluorenyl)]zirconium dichloride, di(p-tolyl)methylene[$\eta^5$-(3-n-butylcyclopentadienyl)] (octamethyloctahydrodibenzofluorenyl)z irconium dichloride, di(p-tolyl)methylene[$\eta^5$-(3-n-butylcyclopentadienyl)] (benzofluorenyl)zirconium dichloride, di(p-tolyl)methylene[$\eta^5$-(3-n-butylcyclopentadienyl)](dibenzofluorenyl) zirconium dichloride, di(p-tolyl)methylene[$\eta^5$-(3-n-butylcyclopentadienyl)](octahydrodibenzofluorenyl)zirconium dichloride, di(p-tolyl)methylene[$\eta^5$-(3-n-butylcyclopentadienyl)](2,7-diphenyl-3,6-di-tert-butylfluorenyl)zirconium dichloride, and di(p-tolyl)methylene[$\eta^5$-(3-n-butylcyclopentadienyl)][$\eta^5$-(2,7-dimethyl-3,6-di-tert-butylfluorenyl)]zirconium dichloride.

Examples of the bridged metallocene compound (P) further include, for example, compounds resulting from the substitution of the above compounds with a hafnium atom or a titanium atom in place of a zirconium atom, or with a methyl group in place of a chloro ligand. Herein, $\eta^5$-tetramethyloctahydrodibenzofluorenyl and $\eta^5$-octamethyloctahydrodibenzofluorenyl, as constituent portions of the bridged metallocene compound (P) exemplified, respectively represent a 4,4,7,7-tetramethyl-(5a,5b,11a,12,12a-$\eta^5$)-1,2,3,4,7,8,9,10-octahydrodibenzo[b,H]fluorenyl group and a 1,1,4,4,7,7,10,10-octamethyl-(5a,5b,11a,12,12a-$\eta^5$)-1,2,3,4,7,8,9,10-octahydrodibenzo[b,H]fluorenyl group.

The bridged metallocene compounds (P) may be used alone, or used in combinations of two or more thereof.

[Compound (Q)]

The compound (Q) is at least one compound selected from the group consisting of an organometal compound (Q-1), an organoaluminum oxy compound (Q-2), and a compound (Q-3) that reacts with the bridged metallocene compound (P) to form an ion pair.

The organometal compound (Q-1) here used is specifically any of organometal compounds (Q-1a), (Q-1b) and (Q-1c) as described below, including Groups II and II elements and Groups XII and XIII elements in the periodic table.

(Q-1a) An organoaluminum compound represented by general formula $R^a_mAl(OR^b)_nH_pX_q$:

wherein $R^a$ and $R^b$ may be the same or different, and each
represent a hydrocarbon group having 1 to 15, preferably 1 to 4 carbon atoms, X represents a halogen atom, m is a number of $0 < m \leq 3$, n is a number of $0 \leq n < 3$, p is a number of $0 \leq p < 3$, q is a number of $0 \leq q < 3$, and $m + n + p + q = 3$ is satisfied.

Examples of the compound include tri-n-alkylaluminums such as trimethylaluminum, triethylaluminum, tri-n-butylaluminum, tri-n-hexylaluminum and tri-n-octylaluminum,

tri-branched alkylaluminums such as triisopropylaluminum triisobutylaluminum, tri-sec-butylaluminun, tri-t-butylaluminum, tri-2-methylbutylaluminum, tri-3-methylhexylaluminum and tri-2-ethylhexylaluminum,
tricycloalkylaluminums such as tricyclohexylaluminum and tricyclooctylaluminum,
triarylaluminums such as triphenylaluminum and tri(4-methylphenyl)aluminum,
dialkylaluminum hydrides such as diisopropylaluminum hydride and diisobutylaluminum hydride,
alkenylaluminums such as isoprenylaluminum represented by general formula $(i\text{-}C_4H_9)_xAl_y(C_5H_{10})_z$ (wherein each of x, y and z is a positive number, and $z \leq 2x$),
alkylaluminum alkoxides such as isobutylaluminum methoxide and isobutylaluminum ethoxide,
dialkylaluminum alkoxides such as dimethylaluminum methoxide, diethylaluminum ethoxide and dibutylaluminum ethoxide,
alkylaluminum sesquialkoxides such as ethylaluminum sesquialkoxide and butylaluminum sesquialkoxide,
partially alkoxylated alkylaluminums having an average composition represented by, for example, general formula $R^a_{2.5}Al(OR^b)_{0.5}$,
alkylaluminum aryloxides such as diethylaluminum phenoxide and diethylaluminum (2,6-di-t-butyl-4-methylphenoxide),
dialkylaluminum halides such as dimethylaluminum chloride, diethylaluminum chloride, dibutylaluminum chloride, diethylaluminum bromide and diisobutylaluminum chloride,
alkylaluminum sesquihalides such as ethylaluminum sesquichloride, butylaluminum sesquichloride and ethylaluminum sesquibromide,
partially halogenated alkylaluminums such as alkylaluminum dihalides such as ethylaluminum dichloride,
dialkylaluminum hydrides such as diethylaluminum hydride and dibutylaluminum hydride,
alkylaluminum dihydrides such as ethylaluminum dihydride and propylaluminum dihydride, and other partially hydrogenated alkylaluminums, and
partially alkoxylated and halogenated alkylaluminums such as ethylaluminum ethoxychloride, butylaluminum butoxychloride and ethylaluminum ethoxybromide.

A compound similar to the compound represented by the general formula $R^a_mAl(OR^b)_nH_pX_q$ can also be used, and examples thereof include an organoaluminum compound in which two or more aluminum compounds are bonded via a nitrogen atom. Specific examples of such a compound include $(C_2H_5)_2AlN(C_2H_5)Al(C_2H_5)_2$.

(Q-1b) A complex alkylated compound represented by general formula $M^2AlR^a_4$, including a Group I metal in the periodic table and aluminum, wherein $M^2$ represents Li, Na or K, and $R^a$ represents a hydrocarbon group having 1 to 15

carbon atoms, preferably 1 to 4 carbon atoms.

Examples of such a compound include $LiAl(C_2H_5)_4$ and $LiAl(C_7H_{15})_4$.

(Q-1c) A dialkyl compound represented by general formula $R^aR^bM^3$, including a Group II or Group XII metal in the periodic table, wherein $R^a$ and $R^b$ may be the same as or different from each other, and each represent a hydrocarbon group having 1 to 15, preferably 1 to 4 carbon atoms, and $M^3$ is Mg, Zn or Cd.

A heretofore known aluminoxane can be used as it is, as the organoaluminum oxy compound (Q-2). Specific examples include a compound represented by the following general formula [III] and a compound represented by the following general formula [IV].

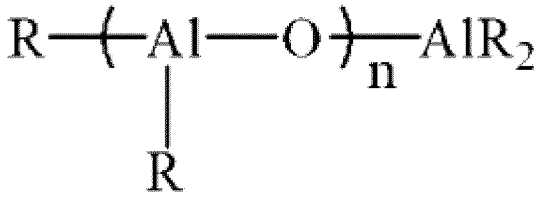

· · · [III]

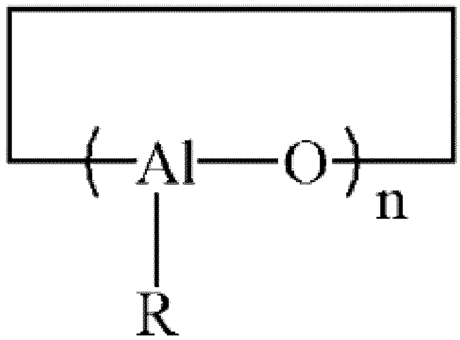

· · · [IV]

In the formulas [III] and [IV], R represents a hydrocarbon group having 1 to 10 carbon atoms, and n represents an integer of 2 or more.

In particular, methylaluminoxane is utilized in which R is a methyl group and n is 3 or more, preferably 10 or more. An organoaluminum compound is allowed to be slightly incorporated in such aluminoxane.

When copolymerization of ethylene and a C3 or higher $\alpha$-olefin is performed at a high temperature in the present invention, benzene-insoluble organoaluminum oxy compounds exemplified in JP H2(1990)-78687A can also be applied. Organoaluminum oxy compounds described in patent literature JP H2(1990)-167305A, or aluminoxanes having two or more alkyl groups, described in patent literature JP H2(1990)-24701A and JP H3(1991)-103407A, can also be suitably utilized. The "benzene-insoluble organoaluminum oxy compound" that may be used in the present invention is a compound that usually contains 10% or less, preferably 5% or less, particularly preferably 2% or less of an Al component to be dissolved in benzene at 60°C, in terms of Al atom, and that is insoluble or hardly soluble in benzene.

Examples of the organoaluminum oxy compound (Q-2) also include modified methylaluminoxanes represented by the following general formula [V].

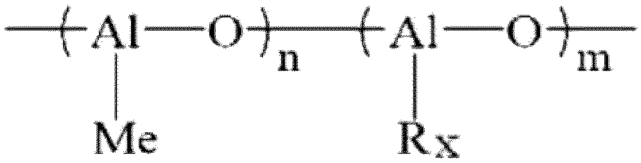

· · · [V]

In the formula [V], R represents a hydrocarbon group having 1 to 10 carbon atoms, and m and n each independently represent an integer of 2 or more.

Methylaluminoxane as one example of the organoaluminum oxy compound (Q-2) is easily available and has high polymerization activity, and thus is commonly used as an activator in olefin polymerization. However, methylaluminoxane has been used as solutions of aromatic hydrocarbons such as toluene or benzene, which are environmentally undesirable, because it is difficult to dissolve in saturated hydrocarbons. Therefore, a flexible body of methylaluminoxane represented by formula [IV] has been recently developed and used as aluminoxane dissolved in a saturated hydrocarbon. Such modified methylaluminoxane represented by the formula [V] is prepared by using trimethylaluminum and alkylaluminum

other than trimethylaluminum as described in, for example, US Pat. No. 4960878 and US Pat. No. 5041584, and, for example, is prepared by using trimethylaluminum and triisobutylaluminum. Aluminoxane in which Rx is an isobutyl group is commercially available, in the form of a solution in a saturated hydrocarbon, under any of trade names MMAO and TMAO (see Tosoh Finechem Corporation, Tosoh Research & Technology Review, Vol 47, 55 (2003)).

Examples of the organoaluminum oxy compound (Q-2) further include organoaluminum oxy compounds represented by the following general formula [VI], containing boron.

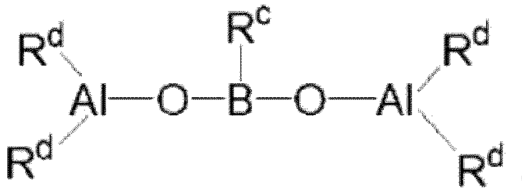

... [VI]

In the formula [VI], $R^c$ represents a hydrocarbon group having 1 to 10 carbon atoms. $R^d$(s) may be the same as or different from each other, and each represent a hydrogen atom, a halogen atom or a hydrocarbon group having 1 to 10 carbon atoms.

Examples of the compound (Q-3) (hereinafter, sometimes abbreviated as "ionized ionic compound" or simply "ionic compound".) that reacts with the bridged metallocene compound (P) to form an ion pair include Lewis acids, ionic compounds, borane compounds and carborane compounds described in, for example, patent literature JP H1(1989)-501950A, JP H1(1989)-502036A, JP H3(1991)-179005A, JP H3(1991)-179006A, JP H3(1991)-207703A, JP H3(1991)-207704A and US5321106B. Examples further include heteropoly compounds and isopoly compounds.

The ionized ionic compound preferably used in the present invention is a boron compound represented by the following general formula [VII].

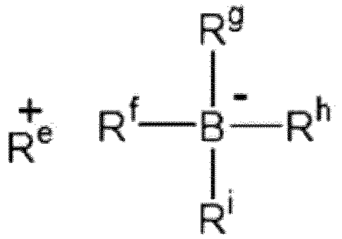

... [VII]

Examples of $R^{e+}$ in the formula [VII] include $H^+$, a carbenium cation, an oxonium cation, an ammonium cation, a phosphonium cation, a cycloheptyltrienyl cation, and a ferrocenium cation having a transition metal. $R^f$ to $R^i$ may be the same as or different from each other, and are each a substituent selected from a hydrocarbon group having 1 to 20 carbon atoms, a silicon-containing group, a nitrogen-containing group, an oxygen-containing group, a halogen atom and a halogen-containing group, preferably a substituted aryl group.

Specific examples of the carbenium cation include trisubstituted carbenium cations such as triphenylcarbenium cation, tris(4-methylphenyl)carbenium cation and tris(3,5-dimethylphenyl)carbenium cation.

Specific examples of the ammonium cation include trialkyl-substituted ammonium cations such as trimethylammonium cation, triethylammonium cation, tri(n-propyl)ammonium cation, triisopropylammonium cation, tri(n-butyl) ammonium cation and triisobutylammonium cation, N,N-dialkylanilinium cations such as N,N-dimethylanilinium cation, N,N-diethylanilinium cation and N,N-2,4,6-pentamethylanilinium cation, and dialkylammonium cations such as diisopropylammonium cation and dicyclohexylammonium cation.

Specific examples of the phosphonium cation include triarylphosphonium cations such as triphenylphosphonium cation, tris(4-methylphenyl)phosphonium cation and tris(3,5-dimethylphenyl)phosphonium cation.

$R^{e+}$, among the above specific examples, is preferably, for example, the carbenium cation or the ammonium cation, particularly preferably triphenylcarbenium cation, N,N-dimethylanilinium cation or N,N-diethylanilinium cation.

Examples of the carbenium cation-containing compound as the ionized ionic compound preferably used in the present invention include, for example, triphenylcarbenium tetraphenylborate, triphenylcarbenium tetrakis(pentafluorophenyl)borate, triphenylcarbenium tetrakis{3,5-di-(trifluoromethyl)phenyl}borate, tris(4-methylphenyl)carbenium tetrakis(pentafluorophenyl)borate and tris(3,5-dimethylphenyl)carbenium tetrakis(pentafluorophenyl)borate.

Examples of the trialkyl-substituted ammonium cation-containing compound as the ionized ionic compound preferably used in the present invention include, for example, triethylammonium tetraphenylborate, tripropylammonium tetraphenylborate, tri(n-butyl)ammonium tetraphenylborate, trimethylammonium tetrakis(4-methylphenyl)borate, trimethylammonium tetrakis(2-methylphenyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis{4-(trifluoromethyl)phenyl}borate, tri(n-butyl)ammonium tetrakis{3,5-di(trifluoromethyl)phenyl}borate, tri(n-butyl) ammonium tetrakis(2-methylphenyl)borate, dioctadecylmethylammonium tetraphenylborate, dioctadecylmethylammonium tetrakis(4-methylphenyl)borate, dioctadecylmethylammonium tetrakis(4-methylphenyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis{4-(trifluoromethyl) phenyl}borate, dioctadecylmethylammonium tetrakis{3,5-di(trifluoromethyl)phenyl}borate and dioctadecylmethylammonium.

Examples of the N,N-dialkylanilinium cation-containing compound as the ionized ionic compound preferably used in the present invention include, for example, N,N-dimethylanilinium tetraphenylborate, N,N-dimethylanilinium tetrakis(pentafluorophenyl)borate, N,N-dimethylanilinium tetrakis{3,5-di(trifluoromethyl)phenyl}borate, N,N-diethylanilinium tetraphenylborate, N,N-diethylanilinium tetrakis(pentafluorophenyl)borate, N,N-diethylanilinium tetrakis{3,5-di(trifluoromethyl)phenyl}borate, N,N-2,4,6-pentamethylanilinium tetraphenylborate and N,N-2,4,6-pentamethylanilinium tetrakis(pentafluorophenyl)borate.

Examples of the dialkylammonium cation-containing compound as the ionized ionic compound preferably used in the present invention include, for example, di-n-propylammonium tetrakis(pentafluorophenyl)borate and dicyclohexylammonium tetraphenylborate.

Other ionic compounds exemplified in patent literature JP2004-51676A can also be used without any limitation.

The ionic compounds (Q-3) may be used alone, or used in combinations of two or more thereof.

Examples of the configuration of the catalyst system include the following [1] to [4].

[1] The catalyst system includes the bridged metallocene compound (P) and the compound (Q-2).

[2] The catalyst system includes the bridged metallocene compound (P), the compound (Q-1) and the compound (Q-2).

[3] The catalyst system includes the bridged metallocene compound (P), the compound (Q-1) and the compound (Q-3).

[4] The catalyst system includes the bridged metallocene compound (P), the compound (Q-2) and the compound (Q-3).

The bridged metallocene compound (P), and the compounds (Q-1) to (Q-3) may be introduced into the reaction system in any order.

[Carrier (R)]

A carrier (R) may be, if necessary, used as a constituent component of the olefin polymerization catalyst in the present invention.

The carrier (R) which may be used in the present invention is an inorganic or organic compound and is a granular or fine particulate solid. In particular, the inorganic compound is preferably a porous oxide, an inorganic chloride, clay, a clay mineral or an ion-exchangeable layered compound.

The porous oxide used can be specifically, for example, $SiO_2$, $Al_2O_3$, MgO, ZrO, $TiO_2$, $B_2O_3$, CaO, ZnO, BaO or $ThO_2$, or a composite or a mixture including such an oxide, for example, natural or synthetic zeolite, $SiO_2$-MgO, $SiO_2$-$Al_2O_3$, $SiO_2$-$TiO_2$, $SiO_2$-$V_2O_5$, $SiO_2$-$Cr_2O_3$ or $SiO_2$-$TiO_2$-MgO. In particular, one mainly containing $SiO_2$ and/or $Al_2O_3$ is preferable. Such porous oxide differs in properties depending on the type and the production method, and the carrier preferably used in the present invention has a particle size in a range from 0.5 to 300 pm, preferably 1.0 to 200 pm, a specific surface area in a range from 50 to 1000 $m^2$/g, preferably 100 to 700 $m^2$/g, and a pore volume in a range from 0.3 to 3.0 $cm^3$/g. Such a carrier is, if necessary, calcinated at 100 to 1000°C, preferably 150 to 700°C, and then used.

The inorganic chloride used is, for example, $MgCl_2$, $MgBr_2$, $MnCl_2$ or $MnBr_2$. The inorganic chloride may be used as it is, or may be pulverized by a ball mill or a vibrating mill, and then used. Alternatively, the inorganic chloride, which is dissolved in a solvent such as an alcohol and then precipitated in the form of fine particles by a precipitating agent, may also be used.

Clay is usually composed of clay minerals as a main component. The ion-exchangeable layered compound is a compound having a crystal structure in which surfaces configured are mutually stacked in parallel by a weak force with, for example, an ionic bond, and includes an exchangeable ion. Most clay mineral corresponds to such an ion-exchangeable layered compound. Such clay, clay mineral, and ion-exchangeable layered compound here used are not limited to natural products, and can also be artificially synthesized products. Examples of the clay, clay mineral or ion-exchangeable layered

compound include clay, clay mineral, and ionic crystalline compounds having a layered crystal structure, such as a hexagonal closest packing type, an antimony type, a $CdCl_2$ type and a $CdI_2$ type. Examples of such clay and clay mineral include, for example, kaolin, bentonite, kibushi clay, gairome clay, allophane, hisingerite, pyrophyllite, micas, montmorillonites, vermiculite, chlorite rocks, palygorskite, kaolinite, nacrite, dickite and halloysite, and examples of such an ion-exchangeable layered compound include, for example, crystalline acidic salts of polyvalent metals, such as $\alpha$-Zr(HAsO$_4$)$_2$·H$_2$O, $\alpha$-Zr(HPO$_4$)$_2$, $\alpha$-Zr(KPO$_4$)$_2$·3H$_2$O, $\alpha$-Ti(HPO$_4$)$_2$, $\alpha$-Ti(HAsO$_4$)$_2$·H$_2$O, $\alpha$-Sn(HPO$_4$)$_2$·H$_2$O, $\gamma$-Zr(HPO$_4$)$_2$, $\gamma$-Ti(HPO$_4$)$_2$ and $\gamma$-Ti(NH$_4$PO$_4$)$_2$·H$_2$O. The clay and the clay mineral for use in the present invention are also preferably subjected to a chemical treatment. The chemical treatment herein used can be any treatment such as a surface treatment for removal of impurities attached to a surface, or a treatment having an effect on the crystal structure of the clay. Specific examples of the chemical treatment include an acid treatment, an alkali treatment, a salt treatment and an organic substance treatment.

The ion-exchangeable layered compound may be a layered compound where a space between layers has been enlarged by exchanging an exchangeable ion in the space between layers with another large and bulky ion by means of ion exchangeability. Such a bulky ion serves as a shore supporting a layered structure, and is usually referred to as pillar. Such introduction of another substance (guest compound) into the space between layers in the layered compound is referred to as intercalation. Examples of the guest compound include cationic inorganic compounds such as $TiCl_4$ and $ZrCl_4$, metal alkoxides such as Ti(OR)$_4$, Zr(OR)$_4$, PO(OR)$_3$ and B(OR)$_3$, wherein R represents, for example, a hydrocarbon group, and metal hydroxide ions such as $[Al_3O_4(OH)_{24}]^{7+}$, $[Zr_4(OH)_{14}]^{2+}$ and $[Fe_3O(OCOCH_3)_6]^+$. These compounds may be used alone, or used in combinations of two or more thereof. In intercalation of such a compound, for example, a polymerized product obtained by hydrolytic polycondensation of a metal alkoxide such as Si(OR)$_4$, Al(OR)$_3$ or Ge(OR)$_4$, wherein R represents, for example, a hydrocarbon group, or a colloidal inorganic compound such as $SiO_2$ can also co-exist. Examples of the pillar include oxide generated by intercalation of the aforementioned metal hydroxide ion into the space between layers and then heating and dehydration.

In particular, the clay or the clay mineral is preferable, and montmorillonite, vermiculite, pectolite, tainiolite and synthetic mica are particularly preferable.

Examples of the organic compound as the carrier (R) include a granular or fine particulate solid having a particle size in a range from 0.5 to 300 pm. Specific examples include a (co)polymer generated with as a main component an $\alpha$-olefin having 2 to 14 carbon atoms, such as ethylene, propylene, 1-butene or 4-methyl-1-pentene, a (co)polymer generated with vinylcyclohexane or styrene as a main component, and modified products thereof.

The usage method and the order of addition of each component of the polymerization catalyst can be freely selected. At least two or more components in the catalyst may be contacted with each other in advance.

The bridged metallocene compound (P) (hereinafter, also referred to as "component (P)") is used in an amount of usually $1 \times 10^{-9}$ to $1 \times 10^{-1}$ mol, preferably $1 \times 10^{-8}$ to $1 \times 10^{-2}$ mol per liter of a reaction volume.

The organometal compound (Q-1) (hereinafter, also referred to as "component (b-1)".) is usually used in an amount so that the molar ratio [(Q-1)/M] of the component (Q-1) to a transition metal atom (M) in the component (P) is usually 0.01 to 50,000, preferably 0.05 to 10,000.

The organoaluminum oxy compound (Q-2) (hereinafter, also referred to as "component (Q-2)".) is used in an amount so that the molar ratio [(Q-2)/M] of the aluminum atom in the component (Q-2) to the transition metal atom (M) in the component (P) is usually 10 to 5,000, preferably 20 to 2,000.

The ionic compound (Q-3) (hereinafter, also referred to as "component (Q-3)".) is used in an amount so that the molar ratio [(Q-3)/M] of the component (Q-3) to the transition metal atom (M) in the component (P) is usually 1 to 10,000, preferably 1 to 5,000.

The polymerization temperature is usually -50°C to 300°C, preferably 30 to 250°C, more preferably 100°C to 250°C, still more preferably 130°C to 200°C. As the temperature in the polymerization temperature region in the above range is higher, the solution viscosity during polymerization is lower and removal of heat of polymerization is also easier. The polymerization pressure is usually normal pressure to 10 MPa-gauge pressure (MPa-G), preferably normal pressure to 8 MPa-G.

The polymerization reaction can be carried out in any method of batchwise, semi-continuous, and continuous methods. Such polymerization can also be continuously carried out in two or more polymerization instruments different in reaction conditions.

The molecular weight of the resulting copolymer can be regulated by the changes in hydrogen concentration and polymerization temperature in a polymerization system. The molecular weight can also be regulated by the amount of the component (Q) used. In the case of addition of hydrogen, the amount added is properly about 0.001 to 5,000 NL per kg of the copolymer to be generated.

The polymerization solvent for use in a liquid phase polymerization method is usually an inert hydrocarbon solvent, and is preferably a saturated hydrocarbon having a boiling point of 50°C to 200°C under normal pressure. Specific examples of the polymerization solvent include aliphatic hydrocarbons such as propane, butane, pentane, hexane, heptane, octane, decane, dodecane and kerosene oil, and alicyclic hydrocarbons such as cyclopentane, cyclohexane and

methylcyclopentane, particularly preferably include hexane, heptane, octane, decane and cyclohexane. The α-olefin to be polymerized, by itself, can also be used as the polymerization solvent. While an aromatic hydrocarbon such as benzene, toluene or xylene, or a halogenated hydrocarbon such as ethylene chloride, chlorobenzene or dichloromethane can also be used as the polymerization solvent, use thereof is not preferable in terms of a reduction in load on the environment and in terms of minimization of the influence on human health.

The kinematic viscosity of the unmodified ethylene/α-olefin copolymer (B') at 100°C depends on the molecular weight of the polymer. In other words, a high molecular weight leads to a high viscosity and a low molecular weight leads to a low viscosity, and thus the kinematic viscosity at 100°C can be adjusted by the above molecular weight adjustment.

A low molecular weight component in a polymer obtained can be removed by a heretofore known method such as distillation under reduced pressure, to thereby allow for adjustment of the molecular weight distribution (Mw/Mn) of the polymer obtained.

The polymer obtained may be further subjected to hydrogen addition (hereinafter, also referred to as hydrogenation.) by a conventionally known method. If the number of double bonds in the polymer obtained by such hydrogenation is reduced, oxidation stability and heat resistance are enhanced.

The ethylene/α-olefin copolymer (B') obtained may be used alone, or two or more of such copolymers different in molecular weight or those different in compositional ratio of monomers may be combined.

The modified copolymer (B) is a modified copolymer having a substituent derived from a compound having a carbon-carbon unsaturated bond as in the requirement (b-3), and can be produced by modifying the ethylene/α-olefin copolymer (B'). Specifically, the modified copolymer (B) can be produced by modifying the ethylene/α-olefin copolymer (B') by any of various heretofore known methods described in, for example, Patent Literature JP S61(1986)-126120A and JP2593264B, or for example, the following methods (1) or (2).

(1) A method including charging the copolymer (B') into, for example, an extruder or a batch reactor, and adding thereto a compound having a carbon-carbon unsaturated bond or a reactive gas/liquid, which are to be reacted, thereby modifying the copolymer (B').

(2) A method including dissolving the copolymer (B') in a solvent, and adding a compound having a carbon-carbon unsaturated bond and a reactive gas/liquid, thereby modifying the copolymer (B').

In any of the above methods, it is preferable that graft copolymerization be carried out in the presence of, for example, one, or two or more radical initiators for efficient graft copolymerization of the compound having a carbon-carbon unsaturated bond, such as a vinyl aromatic compound, and the reactive gas/liquid.

Examples of the radical initiators include organic peroxides and azo compounds.

Examples of the organic peroxides include benzoyl peroxide, dichlorobenzoyl peroxide, dicumyl peroxide, di-tert-butyl peroxide, 2,5-dimethyl-2,5-di(tert-butylperoxy)-3-hexyne, 2,5-dimethyl-2,5-di(tert-butylperoxy)hexane and 1,4-bis(tert-butylperoxyisopropyl)benzene. Examples of the azo compounds include azobisisobutyronitrile and dimethyl azoisobutyrate.

Among those described above, in particular, dialkyl peroxides such as dicumyl peroxide, di-tert-butyl peroxide, 2,5-dimethyl-2,5-di(tert-butylperoxy)-3-hexyne, 2,5-dimethyl-2,5-di(tert-butylperoxy)hexane and 1,4-bis(tert-butylperoxyisopropyl)benzene are preferably used.

The amount of the radical initiator used is usually 0.001 to 15 parts by mass, preferably 0.01 to 15 parts by mass, and more preferably 0.05 to 15 parts by mass per 100 parts by mass of the unmodified copolymer (B').

When the modification is performed by an oxidation reaction using air and/or oxygen, the reaction may be carried out in the presence of one, or two or more selected from, for example, metals or metal salts, inorganic acids and organic acids, in addition to the radical initiator, in order to promote the reaction.

Examples of the metals or metal salts include manganese acetate, cobalt acetate, manganese chloride, nickel oxide and copper, examples of the inorganic acids include hydrochloric acid and nitric acid, and examples of the organic acids include formic acid, acetic acid, oxalic acid, malonic acid, maleic acid, tartaric acid, malic acid, adipic acid and citric acid.

The reaction temperature in the modification reaction is usually 20 to 350°C, preferably 60 to 300°C. In the case of modification with reactive gas, the reaction pressure is preferably normal pressure to 5 MPa.

The modified copolymer produced by any of the above-described methods may be further subjected to secondary modification. Mention is made of, for example, a method described in, for example, patent literature JP2008-508402A.

Examples of the method for modification of the ethylene/α-olefin copolymer (B') include, in addition to the above-described methods, a method in which the copolymer is reacted with a reactive gas or liquid.

Examples of the reactive gas or liquid include air, oxygen, ozone, chlorine, bromine, sulfur dioxide and sulfuryl chloride, and one or more thereof can be used. In particular, an oxidation reaction using air and/or oxygen, chlorination with chlorine, and respective chlorosulfonation reactions using sulfuryl chloride, chlorine and sulfur dioxide, chlorine and

sulfuryl chloride, and chlorine, sulfur dioxide and sulfuryl chloride are preferable. The gas for use in the present method may be diluted with an inert gas such as nitrogen, argon or carbon dioxide to any concentration, and then used.

[Optional components]

The thermoplastic resin composition according to the present invention may contain an optional component such as various known compounding agents on the basis of, for example, desired performance as long as the purpose of the present invention is not hindered. Examples of the optional component include resin components other than the resin (A), softeners other than the modified copolymer (B), plasticizers, tackifiers, antioxidants, ultraviolet absorbers, flame retardants, fillers, silane coupling agents, lubricants, crosslinking agents, crosslinking aids, anti-aging agents, processing aids, antistatic agents, various dyes typified by disperse dyes and acidic dyes, inorganic/organic pigments, foaming agents, defoaming agents, and antimicrobial agents.

Examples of the softener and plasticizer other the modified copolymer (B) include petroleum-based softeners such as process oil, lubricating oil, paraffin, liquid paraffin, petroleum asphalt and petrolatum; coal tar-based softeners such as coal tar and coal tar pitch; fatty oil-based softeners such as castor oil, linseed oil, rapeseed oil and palm oil; tall oil; rubber substitutes; waxes such as beeswax, carnauba wax and lanolin; fatty acids and fatty acid salts such as ricinoleic acid, palmitic acid, barium stearate, calcium stearate and zinc laurate; and synthetic resins such as petroleum resins and coumarone-indene resins. These softeners can be used alone, or used in combinations of two or more thereof. Among them, petroleum-based softeners are preferable, process oil is more preferable, and paraffin-based process oil is particularly preferable.

As the tackifier, normally, an oligomer being a substance capable of imparting fluidity during melting and typically having a molecular weight of several hundreds to several tens of thousands and a softening point of about 60 to 160°C is used. Specific examples thereof include natural rosin, modified rosin, polyterpene-based resins, synthetic petroleum resins, coumarone-based resins, phenol-based resins, xylene-based resins, styrene-based resins, and isoprene-based resins. Further specific examples thereof include aliphatic hydrocarbon resins made mainly from a C4 fraction or a C5 fraction obtained by cracking of, for example, petroleum or naphtha, a mixture thereof, or an any component contained therein (for example, isoprene and 1,3-pentadiene in the C5 fraction); aromatic hydrocarbon resins made mainly from a styrene derivative or an indene contained in a C9 fraction obtained by cracking of, for example, petroleum or naphtha; aliphatic/aromatic hydrocarbon copolymer resins obtained by copolymerizing an any component contained in the C4 fraction and the C5 fraction and an any component contained in the C9 fraction; alicyclic hydrocarbon resins obtained by hydrogenating an aromatic hydrocarbon resin; synthetic terpene-based hydrocarbon resins containing aliphatic, alicyclic and aromatic hydrocarbon resins; terpene-based hydrocarbon resins made from $\alpha,\beta$-pinene in terpene oil; coumarone-indene-based hydrocarbon resins made from indene and a styrene compound in coal tar-based naphtha; low-molecular-weight styrene-based resins; and rosin-based hydrocarbon resins. Alternatively, the tackifier may be one obtained by copolymerizing a plurality of monomers selected from terpene-based monomers, coumarone-based monomers, styrene-based monomers and phenol-based monomers as disclosed in patent literature JP 2005-194488A.

Examples of the antioxidant include phenol-based antioxidants such as 2,6-di-t-butyl-4-methylphenol, n-octadecyl-3-(4'-hydroxy-3',5'-di-t-butylphenyl)propionate, 2,2'-methylenebis(4-methyl-6-t-butylphenol), 2,2'-methylene-bis(4-ethyl-6-t-butylphenol), 2,4-bis(octylthiomethyl)-o-cresol, 2-t-butyl-6-(3-t-butyl-2-hydroxy-5-methylbenzyl)-4-methylphenyl acrylate, 2,4-di-t-amyl-6-[1-(3,5-di-t-amyl-2-hydroxyphenyl)ethyl]phenyl acrylate, 2-[1-(2-hydroxy-3,5-di-tert-pentylphenyl)]acrylate and tetrakis[methylene-3-(3,5-di-t-butyl-4-hydroxyphenyl)propionate]methane, sulfur-based antioxidants such as dilauryl thiodipropionate, lauryl stearyl thiodipropionate and pentaerythritol tetrakis(3-laurylthiopropionate), phosphorus-based antioxidants such tris(nonylphenyl)phosphite and tris(2,4-di-t-butylphenyl)phosphite, and lactone-based antioxidants.

In addition, examples of the antioxidant include primary antioxidants such as naphthylamine-based antioxidants, p-phenylenediamine-based antioxidants, quinoline-based antioxidants, phenol-based antioxidants, hindered phenol-based antioxidants and hindered amine-based antioxidants, and secondary antioxidants such as phosphite-based antioxidants, thioether-based antioxidants and hydroxylamine-based antioxidants.

Examples of the ultraviolet absorber include benzotriazole-based ultraviolet absorbers such as 2-(2'-hydroxy-5'-methlphenyl)benzotriazole, 2-(2'-hydroxy-3',5'-t-butylphenyl)benzotriazole and 2-(2'-hydroxy-3',5'-di-t-butylphenyl)-5-chlorobenzotriazole, benzophenone-based ultraviolet absorbers such as 2-hydroxy-4-methoxybenzophenone, salicylic acid ester-based ultraviolet absorbers, cyanoacrylate-based ultraviolet absorbers, and hindered amine-based light stabilizers.

Examples of the flame retardant include organic phosphorus-containing compounds, inorganic phosphorus-containing compounds, organic halogen-containing compounds, inorganic halogen-containing compounds, organic phosphorus/halogen-containing compounds, inorganic phosphorus/halogen-containing compounds, antimony oxide, titanium oxide, metal hydroxides, hydrous inorganic crystalline compounds.

Examples of the filler include carbon black, graphite, such carbon black surface-treated with, for example, a

silane coupling agent, fine powdered silicic acid, oxide-based fillers such as silica, alumina, magnesium oxide, barium oxide, calcium oxide and titanium oxide, hydroxide-based fillers such as aluminum hydroxide and magnesium hydroxide, sedimentary rock-based fillers such as diatomaceous earth and limestone, clay mineral-based fillers such as kaolinite and montmorillonite, magnetic fillers such as ferrite, iron and cobalt, conductive fillers such as silver, gold, copper and alloys, light calcium carbonate, heavy calcium carbonate, talc, and clay.

Examples of the carbon black include SAF, ISAF, HAF, EPC, XCF, FEF, GPF, HMF, SRF, FT, and MT.

The silica is not particularly limited, and examples thereof include dry-method silica (anhydrous silicic acid) and wet-method silica (hydrous silicic acid).

Examples of the silane coupling agent include trimethoxyvinylsilane and $\gamma$-glycidoxypropyltrimethoxysilane.

Examples of the lubricant include higher fatty acids such as ricinoleic acid, stearic acid, palmitic acid and lauric acid, higher fatty acid salts such as barium stearate, zinc stearate and calcium stearate, and higher fatty acid esters such as ricinoleic acid esters, stearic acid esters, palmitic acid esters and lauric acid esters.

As the crosslinking agent, organic peroxides, sulfur and sulfur compounds can be used. Among them, sulfur is preferable.

Examples of the organic peroxide include dialkyl peroxides such as dicumyl peroxide, di-t-butyl peroxide, dit-butyl peroxy-3,3,5-trimethylcyclohexane, t-butylcumyl peroxide, di-t-amyl peroxide, t-butyl hydroperoxide, 2,5-dimethyl-2,5-di(t-butylperoxine)hexine-3, 2,5-dimethyl-2,5-di(benzoylperoxy)hexane, 2,5-dimethyl-2,5-mono(t-butylperoxy)-hexane and $\alpha,\alpha'$-bis(t-butylperoxy-m-isopropyl)benzene; peroxyesters such as t-butyl peroxyacetate, t-butyl peroxyisobutylate, t-butyl peroxypivalate, t-butyl peroxy maleic acid, t-butyl peroxyneodecanoate, t-butyl peroxybenzoate and di-t-butyl peroxyphthalate;

ketone peroxides such as dicyclohexanone peroxide, and mixtures thereof.

Examples of the sulfur include powdered sulfur, precipitated sulfur, colloidal sulfur, surface-treated sulfur, and insoluble sulfur.

Specific examples of the sulfur compound include sulfur chloride, sulfur dichloride, polysulfide, and sulfur compounds that are crosslinked by releasing active sulfur at a crosslinking (vulcanization) temperature, for example, morpholin disulfide, alkylphenol disulfides, tetramethylthiuram disulfide, dipentamethylenethiuram tetrasulfide and selenium dimethyldithiocarbamate.

[Method for preparing thermoplastic resin composition]

The thermoplastic resin composition of the present invention can be produced by melting and kneading/mixing the thermoplastic resin (A), the modified ethylene/$\alpha$-olefin copolymer (B), and optional components as necessary using a heretofore known method. Here, the components may be melted and kneaded/mixed at a time, or may be mixed with all or a part of the components remaining unmelted, followed by being melted by heating, and kneaded/mixed. For example, a plastomill, a Henschel mixer, a V-blender, a ribbon blender, a tumbler blender, a kneader, a kneader-ruder, a pressure kneader, a Brabender kneader, a disperser, a uniaxial extruder, a biaxial extruder, a plastomill, and a Banbury mixer can be used for the melting and kneading/mixing. The inside of the equipment may be decompressed if necessary. The thermoplastic resin composition obtained by the melting and kneading/mixing can be filled into, for example, a mold release box, a pail can or a drum can, cooled to solidify, and stored.

In addition, for example, a crosslinking agent such as an organic peroxide and a crosslinking aid can be added as desired, or these necessary components can be mixed at a time, and melted and kneaded/mixed to perform partial crosslinking to the extent that thermoplasticity is not impaired. It is also possible to form a crosslinked product by adding, for example, a crosslinking agent such as an organic peroxide and crosslinking aid. Rubber elasticity at a high temperature can be improved by forming a partially crosslinked product or a crosslinked product. Examples of the suitable crosslinking agent include organic peroxides, and specific examples thereof include 2,5-dimethyl-2,5-di(t-butylperoxy)-hexane; 2,5-dimethyl-2,5-di(benzoylperoxy)-hexane; t-butyl peroxybenzoate; dicumyl peroxide; t-butylcumyl peroxide; diisopropyl benzohydroperoxide; 1,3-bis-(t-butylperoxyisopropyl)-benzene; benzoyl peroxide; and 1,1-di(t-butylperoxy)-3,3,5-trimethylcyclohexane. Examples of the useful crosslinking aid include divinylbenzene, trimethylolpropane triacrylate, ethylene dimethacrylate, diallylphthalate, quinone dioxime, phenylenebismaleimide, polyethylene glycol dimethacrylate and unsaturated silane compounds. Any of these organic peroxides and crosslinking aids can be optionally used in an amount of 0.1 to 5 parts by mass when the total amount of the thermoplastic resin (A) and the modified ethylene/$\alpha$-olefin copolymer (B) is defined as 100 parts by mass. It is also possible to use two or more of these organic peroxides and crosslinking aids in combination if necessary. When an unsaturated silane compound is used as the crosslinking aid, crosslinking can be made to further proceed by contact with moisture in the presence of a silanol condensation catalyst.

The thermoplastic resin composition of the present invention can be used for various applications without limitation, and can be suitably used for, for example, coating materials, adhesives, seal materials, damping materials and automobile interior material because of having a good balance between flexibility and mechanical strength.

[Coating material, adhesive, seal material, damping material and automobile interior material]

The thermoplastic resin composition of the present invention can be appropriately shaped by a heretofore known method and used as, for example, coating materials, adhesives, seal materials, damping materials and automobile interior materials. The thermoplastic resin composition of the present invention is suitably used as coating materials, adhesives, seal materials, damping materials and automobile interior material because of having a good balance between flexibility and mechanical strength. In particular, in the case of use as coating materials, adhesives and seal materials, good adhesion performance/sealing performance can be developed because excellent adhesiveness to an adherend/sealed material is obtained in relation to flexibility, and an adhesive layer/seal material phase itself has excellent strength in relation to mechanical strength.

Examples

Hereinafter the present invention will be described in detail with reference to Examples, but the present invention is not limited to these Examples. Raw material components used in Examples and Comparative Examples are as follows.

[Thermoplastic resin (A)]

In Examples and Comparative Examples below, the following commercially available products were used as the thermoplastic resin (A).
A-1: Polystyrene-poly(ethylene/butene)-polystyrene block copolymer (SEBS), SEPTON 8004 manufactured by Kuraray Co., Ltd. (styrene content: 31 mass%, MFR (230°C, 2.16 kg): < 0.1 g/10 min, Mw: 110,000)
A'-1: Polystyrene-polyisoprene-polystyrene block copolymer (SIS), SIS 5403P manufactured by ENEOS Materials Corporation (styrene content: 15% by mass)

[Modified ethylene/α-olefin copolymer (B)]

The methods for measuring various properties of the modified ethylene/α-olefin copolymer (B) and the unmodified ethylene/α-olefin copolymer (B') are as follows.

<Kinematic viscosity at 100°C>

The kinematic viscosity at 100°C (100°C kinematic viscosity) was measured and calculated by a method described in JIS K 2283.

<Weight-average molecular weight (Mw) and Mw/Mn>

The weight-average molecular weight (Mw) and Mw/Mn of each of the modified ethylene/α-olefin copolymer (B) and the unmodified ethylene/α-olefin copolymer (B') were determined by the following high-performance GPC measurement apparatus.
High-performance GPC measurement apparatus: HLC8320GPC manufactured by Tosoh Corporation
Mobile phase: THF (manufactured by Wako Pure Chemical Industries, Ltd., stabilizer-free, liquid chromatography grade)
Columns: Two TSKgel Super Multipore HZ-M columns manufactured by Tosoh Corporation were connected in series
Sample concentration: 5 mg/mL
Mobile phase flow rate: 0.35 mL/min
Measurement temperature: 40°C
Standard sample for calibration curve: PStQuick MP-M manufactured by Tosoh Corporation

<Ethylene content (mol%)>

The ethylene content of each of the modified ethylene/α-olefin copolymer (B) and the unmodified ethylene/α-olefin copolymer (B') was measured using ECP500 nuclear magnetic resonance apparatus manufactured By JEOL Ltd. and using a mixed solvent of o-dichlorobenzene/deuterated benzene (80/20 vol%) as a solvent. The sample concentration

was 55 mg/0.6 mL, the measurement temperature was 120°C, the observation nuclear was $^{13}C$ (125 MHz), the sequence was single pulse proton decoupling, the pulse width was 4.7 p/s (45° pulse), the repetition time was 5.5 seconds, the cumulative number was 10,000 or more, and the reference for the determination of chemical shifts was 27.50 ppm.

The ethylene content of each of the modified ethylene/α-olefin copolymer (B) and the unmodified ethylene/α-olefin copolymer (B') was determined from a $^{13}C$-NMR spectrum measured as described above, based on reports of "Polymer Analysis Handbook" (published from Asakura Publishing Co., Ltd., pp.163-170), G. J. Ray (Macromolecules, 10, 773 (1977)), J. C. Randall (Macro-molecules, 15, 353 (1982)), and K. Kimura et al.(Polymer, 25, 4418 (1984)).

<Content of moiety derived from styrene>

The content of a moiety derived from styrene (hereinafter, also referred to as a "styrene content (amount of modification)") from the following expression using an area ratio in $^{1}H$-NMR.

Content of moiety derived from styrene (% by mass) = 100 × (B × 104 ÷ 5) ÷ [(A - B × 3/5) × 14 ÷ 2 + (B × 104 a 5)]

(A = area ratio in the range of 0.3 to 4 ppm (peaks assigned to methyl/methylene/methine derived from the ethylene/α-olefin copolymer and the vinyl group of the vinyl aromatic), and
B = area ratio in the range of 6 to 8 ppm (a peak assigned to an aromatic proton)

<Brookfield viscosity>

The Brookfield viscosity of the modified ethylene/α-olefin copolymer (B) was measured at 100°C according to JIS K7117-1.

[Production of modified ethylene/α-olefin copolymer (B)]

The methods for producing modified ethylene/α-olefin copolymers (B) used in Examples and Comparative Examples are shown below.

[Production Example 1] Production of styrene-modified ethylene/propylene copolymer (B-1)

A 2 L internal volume stainless steel autoclave thoroughly purged with nitrogen was loaded with 910 mL of heptane and 45 g of propylene, the temperature of the system was raised to 130°C, and thereafter the total pressure was set to 3 MPaG by supplying 2.24 MPa of hydrogen and 0.09 MPa of ethylene. Next, 0.4 mmol of triisobutylaluminum, 0.0006 mmol of [diphenylmethylene ($\eta^5$-3-n-butylcyclopentadienyl) ($\eta^5$-2,7-di-tert-butylfluorenyl)]zirconium dichloride, and 0.006 mmol of N,N-dimethylanilinium tetrakis(pentafluorophenyl)borate were injected under pressure with nitrogen, and polymerization was initiated by stirring at a rotational speed of 400 rpm. Thereafter, only ethylene was continuously supplied to keep the total pressure at 3 MPaG, and the polymerization was carried out at 130°C for 5 minutes. The polymerization was terminated by addition of a small amount of ethanol into the system, and thereafter unreacted ethylene, propylene and hydrogen were purged. The obtained polymerization solution was washed with 1000 mL of 0.2 mol/L hydrochloric acid three times and then with 1000 mL of distilled water three times, and dried over magnesium sulfate, thereafter the solvent was distilled off under reduced pressure, and thus a crude ethylene/propylene copolymer was obtained.

A 1 L internal volume stainless steel autoclave was loaded with 100 mL of a 0.5 mass% hexane solution of a Pd/alumina catalyst and 500 mL of a 30 mass% hexane solution of the crude ethylene/propylene copolymer obtained, and the autoclave was tightly closed and was purged with nitrogen. Next, the temperature was raised to 140°C under stirring, the inside of the system was purged with hydrogen, thereafter the pressure was increased to 1.5 MPa with hydrogen, and hydrogenation reaction was carried out for 15 minutes. The reaction liquid was subjected to filtration to separate a hydrogenation catalyst, thereafter the solvent was distilled off under reduced pressure, and the residue was dried at 80°C under reduced pressure for 24 hours to obtain an ethylene/propylene copolymer (B'-1). The copolymer (B'-1) had an ethylene content of 51.9 mol%, Mw of 2,700, Mw/Mn of 1.5, and a 100°C kinematic viscosity of 40 $mm^2/s$.

Subsequently, 327 g of the unmodified copolymer (B'-1) was placed in a 1 L glass autoclave, and the purged with nitrogen. The temperature was then raised to 160°C with stirring, and 87 g of styrene and 14.7 g of di-tert-butyl peroxide were then supplied over 4 hours. After completion of the supplying, the mixture was reacted over 1 hour. Next, decompression was performed with a vacuum pump for 1 hour while nitrogen was gradually fed, thereby removing impurities (unreacted styrene and decomposed products of di-tert-butyl peroxide). A styrene-modified ethylene/propylene copolymer (B-1) was obtained by the above operation. The styrene-modified ethylene/propylene copolymer (B-1) had a

styrene content (modification amount) of 20 mol%, Mw of 8,800, Mw/Mn of 3.1, and a 100°C Brookfield viscosity of 170 mPa·s.

[Production Example 2] Production of styrene-modified ethylene/propylene copolymer (B-2)

A reaction was carried out and impurities were removed in the same manner as in Production Example 1 except that the amounts of the copolymer (B'-1) obtained from the above-described Production Example, styrene and di-tert-butyl peroxide were changed to 280 g, 132 g and 22.2 g, respectively, and six hour were taken for the supplying. A styrene-modified ethylene/propylene copolymer (B-2) was obtained by the above operation. The styrene-modified ethylene/propylene copolymer (B-2) had a styrene content (modification amount) of 29 mol%, Mw of 20,400, Mw/Mn of 5.7, and a 100°C Brookfield viscosity of 810 mPa·s.

[Production Example 3] Production of styrene-modified ethylene/propylene copolymer (B-3)

A reaction was carried out and impurities were removed in the same manner as in Production Example 1 except that the amounts of the copolymer (B'-1) obtained from the above-described Production Example, styrene and di-tert-butyl peroxide were changed to 240 g, 168 g and 28.3 g, respectively, and seven hours were taken for the supplying. A styrene-modified ethylene/propylene copolymer (B-3) was obtained by the above operation. The styrene-modified ethylene/propylene copolymer (B-3) had a styrene content (modification amount) of 37 mol%, Mw of 70,500, Mw/Mn of 16.2, and a 100°C Brookfield viscosity of 6,800 mPa·s.

[Production Example 4] Production of styrene-modified ethylene/propylene copolymer (B-4)

A reaction was carried out and impurities were removed in the same manner as in Production Example 1 except that the amounts of the copolymer (B'-1) obtained from the above-described Production Example, styrene and di-tert-butyl peroxide were changed to 167 g, 251 g and 10.5 g, respectively, and fourteen hours were taken for the supplying. A styrene-modified ethylene/propylene copolymer (B-4) was obtained by the above operation. The styrene-modified ethylene/propylene copolymer (B-4) had a styrene content (modification amount) of 59 mol%, Mw of 14,000, Mw/Mn of 3.3, and a 100°C Brookfield viscosity of 1,200,000 mPa·s.

[Production Example 5] Production of styrene-modified ethylene/propylene copolymer (B-5)

A 2 L volume continuous polymerization reactor equipped with a stirring blade and thoroughly purged with nitrogen was loaded with 1 L of dehydrated and purified hexane, a 96 mmol/L hexane solution of ethylaluminum sesquichloride ($Al\ (C_2H_5)_{1.5}\ \cdot Cl_{1.5}$) was continuously supplied at a rate of 500 mL/h for 1 hour, and thereafter a 16 mmol/L hexane solution of $VO(OC_2H_5)Cl_2$ as a catalyst and hexane were continuously supplied at rates of 500 mL/h and 500 mL/h, respectively. On the other hand, the polymerization solution was continuously withdrawn from the top of the reactor so that the amount of the polymerization solution in the reactor was constant at 1 L.

Next, 47 L/h ethylene gas, 47 L/h propylene gas and 20 L/h hydrogen gas were supplied through bubbling tubes. The copolymerization reaction was carried out at 35°C while circulating a refrigerant through a jacket attached to the outside of the reactor. In this manner, a polymerization solution including an ethylene/propylene copolymer was obtained.

The polymerization solution obtained was washed with 500 mL of 0.2 mol/L hydrochloric acid with respect to 1 L of the polymerization solution three times and then with 500 mL of distilled water with respect to 1 L of the polymerization solution three times, and was dried over magnesium sulfate, and thereafter the solvent was distilled off under reduced pressure. The viscous liquid obtained was dried under reduced pressure at 130°C for 24 hours, and thus an ethylene/-propylene copolymer (B'-2) was obtained. The ethylene/propylene copolymer (B'-2) had an ethylene content of 54.9 mol%, Mw of 14,000, Mw/Mn of 2.0, and a 100°C kinematic viscosity of 2,100 $mm^2/s$.

Subsequently, 369 g of the unmodified copolymer (B'-2) was placed in a 1 L glass autoclave, and the purged with nitrogen. The temperature was then raised to 160°C with stirring, and 43 g of styrene and 4.2 g of di-tert-butyl peroxide were then supplied over 6 hours. After completion of the supplying, the mixture was reacted over 1 hour. Next, decompression was performed with a vacuum pump for 1 hour while nitrogen was gradually fed, thereby removing impurities (unreacted styrene and decomposed products of di-tert-butyl peroxide). A styrene-modified ethylene/propylene copolymer (B-4) was obtained by the above operation. The styrene-modified ethylene/propylene copolymer (B-5) had a styrene content (modification amount) of 10 mol%, Mw of 21,500, Mw/Mn of 3.1, and a 100°C Brookfield viscosity of 4,500 mPa·s.

[Compounding agent]

In Examples and Comparative Examples below, the following commercially available products were used as the compounding agent.

C-1: Paraffin-based mineral oil, Diana Process Oil PW-90 manufactured by Idemitsu Kosan Co., Ltd.
C-2: Naphthene-based mineral oil, sunthene 4240 manufactured by Japan Sun Oil Company, Ltd.
C-3: Aromatic mineral oil, Diana Process Oil AH-16 manufactured by Idemitsu Kosan Co., Ltd.

[Styrene-modified ethylene/propylene rubber]

In Examples and Comparative Examples below, modified rubber (C-4) produced by the following production method was used as the styrene-modified ethylene/propylene rubber.

A polymerization vessel was charged with 100 parts by mass of ethylene/propylene copolymer rubber (ESPRENE E-120 manufactured by SUMITOMO CHEMICAL COMPANY, LIMITED.), 40 parts by mass of styrene, 500 parts by mass of water, 1.5 parts by mass of benzoyl peroxide, 3 parts by mass of calcium phosphate and 3 parts by mass of polyethylene glycol, and the inside of the vessel was thoroughly purged with nitrogen while stirring was performed. Thereafter, polymerization was performed at 90°C for 1 hour, and then at 110°C for 1 hour. The polystyrene in the obtained graft copolymer was extracted with methyl ethyl ketone. The result showed that about 20% by mass of styrene was graft-copolymerized in the copolymer. The Brookfield viscosity at 100°C was too high to be measured.

[Examples 1 to 5 and Comparative Examples 1 to 7]

The thermoplastic resins (A-1) to (A'-1), the modified ethylene/α-olefin copolymer (B-1) to (B-5), the unmodified ethylene/α-olefin copolymer (B'-1) and (B'-2) and other compounding agents (C-1) to (C-4) were kneaded by Labo Plastomill at a compounding ratio described in Table 1. The kneaded product was taken out, and then pressurized by a thermal compressor at 200°C for 6 minutes to produce a 2 mm-thick press sheet of 150 mm square.

Subsequently, Dumbbell shape No. 3 specimen specified in JIS K 6251 was prepared by punching the press sheet, and subjected to a tensile test with reference to JIS K 6251 with a pulling rate set to 500 mm/min.

(1) 100% Modulus (M100)

Here, stress at an elongation percentage of 100%, i.e., a 100% modulus (M100), was measured. Evaluation of M100 was based on the following criteria. The results of evaluation are shown in Table 1.

$$\text{Score 2: M100} \leq 0.5\ \text{MPa}$$

$$\text{Score 1: M100} > 0.5\ \text{MPa}$$

(2) Tensile breaking strength (TB)

At the same time, the tensile breaking strength (TB) was measured. Evaluation of TB was based on the following criteria. The results of evaluation are shown in Table 1.

$$\text{Score 3: TB} \geq 9\ \text{MPa}$$

$$\text{Score 2: 8.5 Mpa} \leq \text{TB} < 9\ \text{MPa}$$

$$\text{Score 1: TB} < 8.5\ \text{MPa}$$

Table 1

| | | | Example 1 | Example 2 i | Example 3 | Example 4 | Example 5 | Comparative Example 1 | Comparative Example 2 |
|---|---|---|---|---|---|---|---|---|---|
| Composition | A-1 | phr | 100 | 100 | 100 | 100 | 100 | 100 | 100 |
| | A'-1 | phr | | | | | | | |
| | B-1 | phr | 100 | | | | | | |
| | B-2 | phr | | 100 | | | | | |
| | B-3 | phr | | | 100 | | | | |
| | B-4 | phr | | | | 100 | | | |
| | B-5 | phr | | | | | 100 | | |
| | B'-1 | phr | | | | | | 100 | |
| | B'-2 | phr | | | | | | | 100 |
| | C-1 | phr | | | | | | | |
| | C-2 | phr | | | | | | | |
| | C-3 | phr | | | | | | | |
| | C-4 | phr | | | | | | | |
| Evaluation | M100 | score | 2 | 1 | 1 | 1 | 2 | 2 | 2 |
| | TB | score | 3 | 3 | 3 | 3 | 2 | 1 | 1 |
| | Total | score | 5 | 4 | 4 | 4 | 4 | 3 | 3 |

Table 1 (continued)

| | | | Comparative Example 3 | Comparative Example 4 | Comparative Example 5 | Comparative Example 6 | Comparative Example 7 |
|---|---|---|---|---|---|---|---|
| Composition | A-1 | phr | 100 | 100 | 100 | | 100 |
| | A'-1 | phr | | | | 100 | |
| | B-1 | phr | | | | 100 | |
| | B-2 | phr | | | | | |
| | B-3 | phr | | | | | |
| | B-4 | phr | | | | | |
| | B-5 | phr | | | | | |
| | B'-1 | phr | | | | | |
| | B'-2 | phr | | | | | |
| | C-1 | phr | 100 | | | | |
| | C-2 | phr | | 100 | | | |
| | C-3 | phr | | | 100 | | |
| | C-4 | phr | | | | | 100 |
| Evaluation | M100 | score | 2 | 1 | 1 | 1 | 1 |
| | TB | score | 1 | 1 | 1 | 1 | 2 |
| | Total | score | 3 | 2 | 2 | 2 | 3 |

## Claims

**1.** A thermoplastic resin composition comprising:

100 parts by mass of a thermoplastic resin (A) which is a hydrogenated product of a block copolymer comprising a polymer block (X) having a vinyl aromatic compound as a main component and a polymer block (Y) having a conjugated diene compound as a main component; and
1 to 400 parts by mass of a modified ethylene/α-olefin copolymer (B) satisfying the following requirements (b-1) to (b-3) :

requirement (b-1): the content of a structural unit derived from ethylene is in the range of 15 to 85 mol%, provided that the sum of the content of a structural unit derived from ethylene and the content of a structural unit derived from an α-olefin is 100 mol%,
requirement (b-2) the weight-average molecular weight (Mw) determined by gel permeation chromatography (GPC) is in the range of 1,000 to 100,000, and
requirement (b-3): the modified ethylene/α-olefin copolymer (B) is a modified copolymer having a substituent derived from one or more vinyl aromatic compounds, and the content of a moiety derived from the vinyl aromatic compounds in the modified copolymer is in the range of 1 to 70% by mass.

**2.** The thermoplastic resin composition according to claim 1, wherein the content of a structural unit derived from ethylene is in the range of 40 to 60 mol% in the requirement (b-1), the weight-average molecular weight (Mw) determined by gel permeation chromatography (GPC) is in the range of 2,000 to 80,000 in the requirement (b-2), and the content of a moiety derived from the vinyl aromatic compounds in the modified copolymer is in the range of 3 to 40% by mass in the requirement (b-3).

**3.** The thermoplastic resin composition according to claim 1, wherein the modified ethylene/α-olefin copolymer (B) further satisfies the following requirement (b-5):
requirement (b-5): the Brookfield viscosity at 100°C, as measured according to JIS K7117-1, is in the range of 10 to 5,000,000 mPa·s.

**4.** A coating material comprising the thermoplastic resin composition according to claim 1.

**5.** An adhesive comprising the thermoplastic resin composition according to claim 1.

**6.** A seal material comprising the thermoplastic resin composition according to claim 1.

**7.** A damping material comprising the thermoplastic resin composition according to claim 1.

**8.** An automobile interior material comprising the thermoplastic resin composition according to claim 1.

**9.** A method for producing a thermoplastic composition, comprising a step of mixing

100 parts by mass of a thermoplastic resin (A) which is a hydrogenated product of a block copolymer comprising a polymer block (X) having a vinyl aromatic compound as a main component and a polymer block (Y) having a conjugated diene compound as a main component, and
1 to 400 parts by mass of a modified ethylene/$\alpha$-olefin copolymer (B) satisfying the following requirements (b-1) to (b-3) :

requirement (b-1): the ethylene structural unit content is 15 to 85 mol%,
requirement (b-2): the weight-average molecular weight (Mw) determined by gel permeation chromatography (GPC) is 1,000 to 100,000, and
requirement (b-3): the modified ethylene/$\alpha$-olefin copolymer (B) is a modified copolymer having a substituent derived from one or more vinyl aromatic compounds, and the content of a moiety derived from the vinyl aromatic compounds in the modified copolymer is in the range of 1 to 70% by mass.

**10.** The production method according to claim 9, wherein the modified ethylene/$\alpha$-olefin copolymer (B) is a modified product of an ethylene/$\alpha$-olefin copolymer (B") produced by the following method ($\alpha$):
method ($\alpha$): a method comprising a step of solution polymerizing ethylene and an $\alpha$-olefin in the presence of a catalyst system comprising:

a bridged metallocene compound (P-1) represented by the following formula (formula 1), and
at least one compound (Q) selected from the group consisting of an organometal compound (Q-1), an organoaluminum oxy compound (Q-2), and a compound (Q-3) that reacts with the bridged metallocene compound (P-1) to form an ion pair,

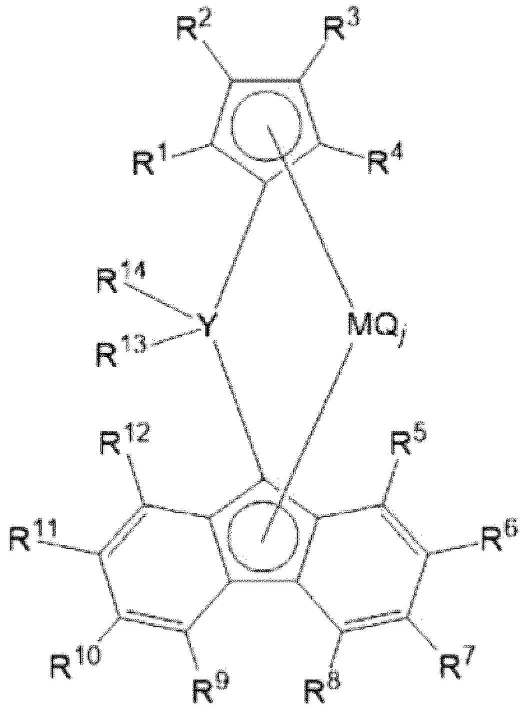

• • • (formula 1)

wherein $R^1$, $R^2$, $R^3$, $R^4$, $R^5$, $R^8$, $R^9$ and $R^{12}$ are each independently a hydrogen atom, a hydrocarbon group, or a

silicon-containing hydrocarbon group, and a plurality of adjacent groups are optionally linked to each other to form a ring structure;
$R^6$ and $R^{11}$ are the same group and are a hydrogen atom, a hydrocarbon group, or a silicon-containing hydrocarbon group;
$R^7$ and $R^{10}$ are the same group and are a hydrogen atom, a hydrocarbon group, or a silicon-containing hydrocarbon group;
$R^6$ and $R^7$ are optionally bonded to a hydrocarbon having 2 to 3 carbon atoms to form a ring structure;
$R^{10}$ and $R^{11}$ are optionally bonded to a hydrocarbon having 2 to 3 carbon atoms to form a ring structure;
$R^6$, $R^7$, $R^{10}$, and $R^{11}$ are not hydrogen atoms at the same time;
Y is a carbon atom or a silicon atom;
$R^{13}$ and $R^{14}$ are each independently a hydrogen atom, a hydrocarbon group, or a silicon-containing hydrocarbon group, and are optionally linked to each other to form a ring structure;
M is Ti, Zr, or Hf;
Q is independently a halogen atom, a hydrocarbon group, an anionic ligand, or a neutral ligand capable of coordinating to a lone pair of electrons; and
j is an integer of 1 to 4.

**11.** The production method according to claim 10, wherein in the formula 1, one or both of $R^{13}$ and $R^{14}$ are aryl groups.

**12.** The production method according to claim 10, wherein in the formula 1, both $R^{13}$ and $R^{14}$ are aryl groups, and one of $R^2$ and $R^3$ is a saturated hydrocarbon group having 4 carbon atoms.

**13.** The production method according to any one of claims 9 to 12, wherein the content of a structural unit derived from ethylene is in the range of 40 to 60 mol% in the requirement (b-1), the weight-average molecular weight (Mw) determined by gel permeation chromatography (GPC) is in the range of 2,000 to 80,000 in the requirement (b-2), the content of a moiety derived from the vinyl aromatic compounds in the modified copolymer is in the range of 3 to 40% by mass in the requirement (b-3), and the modified ethylene/α-olefin copolymer (B) further satisfies the following requirement (b-5) :
requirement (b-5): the Brookfield viscosity at 100°C, as measured according to JIS K7117-1, is in the range of 10 to 5,000,000 mPa·s.

## INTERNATIONAL SEARCH REPORT

International application No.
**PCT/JP2023/009685**

**A. CLASSIFICATION OF SUBJECT MATTER**

***C08L 53/02***(2006.01)i; ***C08F 4/6592***(2006.01)i; ***C08F 8/00***(2006.01)i; ***C08L 23/26***(2006.01)i; ***C08L 101/00***(2006.01)i; ***C09D 123/16***(2006.01)i; ***C09D 123/26***(2006.01)i; ***C09D 153/00***(2006.01)i; ***C09J 123/16***(2006.01)i; ***C09J 153/00***(2006.01)i; ***C09K 3/10***(2006.01)i

FI: C08L53/02; C08F4/6592; C08F8/00; C08L23/26; C08L101/00; C09D123/16; C09D123/26; C09D153/00; C09J123/16; C09J153/00; C09K3/10 Z

According to International Patent Classification (IPC) or to both national classification and IPC

**B. FIELDS SEARCHED**

Minimum documentation searched (classification system followed by classification symbols)

C08L53/02; C08F4/6592; C08F8/00; C08L23/26; C08L101/00; C09D123/16; C09D123/26; C09D153/00; C09J123/16; C09J153/00; C09K3/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-222885 A (MITSUI CHEMICALS INC) 28 December 2016 (2016-12-28) claims, paragraphs [0035], [0042], [0051]-[0058], [0091]-[0096], [0097]-[0117], production examples 2, b-3, example 2 | 1-13 |
| Y | WO 2015/147215 A1 (MITSUI CHEMICALS INC) 01 October 2015 (2015-10-01) claims, paragraphs [0151]-[0155], examples | 1-13 |
| A | WO 2018/159483 A1 (MITSUI CHEMICALS INC) 07 September 2018 (2018-09-07) | 1-13 |
| A | WO 2016/181641 A1 (MITSUI CHEMICALS INC) 17 November 2016 (2016-11-17) | 1-13 |
| A | JP 2019-156873 A (MITSUI CHEMICALS INC) 19 September 2019 (2019-09-19) | 1-13 |
| P, X | WO 2022/186053 A1 (MITSUI CHEMICALS INC) 09 September 2022 (2022-09-09) | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/009685**

| Patent document cited in search report | Publication date (day/month/year) | Patent family member(s) | Publication date (day/month/year) |
|---|---|---|---|
| JP 2016-222885 A | 28 December 2016 | JP 2015-147946 A | |
| WO 2015/147215 A1 | 01 October 2015 | US 2017/0114166 A1<br>claims, paragraphs [0198]-[0201], examples<br>EP 3124505 A1<br>KR 10-2016-0121566 A<br>CN 106133006 A | |
| WO 2018/159483 A1 | 07 September 2018 | US 2020/0010588 A1<br>EP 3591010 A1<br>KR 10-2019-0104076 A<br>CN 110325595 A | |
| WO 2016/181641 A1 | 17 November 2016 | TW 201700621 A | |
| JP 2019-156873 A | 19 September 2019 | (Family: none) | |
| WO 2022/186053 A1 | 09 September 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020117661 A
- JP H219901163 B
- JP H219907998 B
- JP S611986221207 A
- JP H71995121969 B
- JP 2796376 B
- JP H71995145212 A
- JP H2199078687 A
- JP H21990167305 A
- JP H2199024701 A
- JP H31991103407 A
- US 4960878 A
- US 5041584 A
- JP H11989501950 A
- JP H11989502036 A
- JP H31991179005 A
- JP H31991179006 A
- JP H31991207703 A
- JP H31991207704 A
- US 5321106 B
- JP 2004051676 A
- JP S611986126120 A
- JP 2593264 B
- JP 2008508402 A
- JP 2005194488 A


### Non-patent literature cited in the description


- Polymer Analysis Handbook. Asakura Publishing Co., Ltd., 163-170
- *Tosoh Research & Technology Review*, 2003, vol. 47, 55
- **G. J. RAY**. *Macromolecules*, 1977, vol. 10, 773
- **J. C. RANDALL**. *Macro-molecules*, 1982, vol. 15, 353
- **K. KIMURA et al.** *Polymer*, 1984, vol. 25, 4418